(19)

**Europäisches Patentamt**

**European Patent Office**

**Office européen des brevets**

(11) **EP 4 368 737 A1**

(12) **EUROPEAN PATENT APPLICATION**
published in accordance with Art. 153(4) EPC

(43) Date of publication:
**15.05.2024 Bulletin 2024/20**

(21) Application number: **22848917.5**

(22) Date of filing: **18.03.2022**

(51) International Patent Classification (IPC):
*C22C 38/00* (2006.01)     *C21D 9/46* (2006.01)
*C22C 18/00* (2006.01)     *C22C 38/06* (2006.01)
*C22C 38/60* (2006.01)     *C23C 2/06* (2006.01)
*C23C 2/28* (2006.01)

(52) Cooperative Patent Classification (CPC):
**C21D 9/46; C22C 18/00; C22C 38/00; C22C 38/06; C22C 38/60; C23C 2/06; C23C 2/28**

(86) International application number:
**PCT/JP2022/012856**

(87) International publication number:
**WO 2023/007833 (02.02.2023 Gazette 2023/05)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **28.07.2021 JP 2021123701**

(71) Applicant: **JFE Steel Corporation
Tokyo 100-0011 (JP)**

(72) Inventors:
• **HIGUCHI, Sho
Tokyo 100-0011 (JP)**

• **KAWASAKI, Yoshiyasu
Tokyo 100-0011 (JP)**
• **NAKAGAITO, Tatsuya
Tokyo 100-0011 (JP)**
• **YAMASHITA, Takako
Tokyo 100-0011 (JP)**
• **KANAZAWA, Tomomi
Tokyo 100-0011 (JP)**
• **YAMAMOTO, Shunsuke
Tokyo 100-0011 (JP)**

(74) Representative: **Hoffmann Eitle
Patent- und Rechtsanwälte PartmbB
Arabellastraße 30
81925 München (DE)**

(54) **GALVANIZED STEEL SHEET AND MEMBER, AND METHOD FOR MANUFACTURING SAME**

(57)     A galvanized steel sheet combining high strength with excellent formability, specifically, excellent ductility, hole expansion formability, local ductility, strain hardenability, and dimensional accuracy when forming a member. The base steel sheet has a defined chemical composition and a steel microstructure as follows: ferrite area ratio: 35.0 % or more and 95.0 % or less, bainitic ferrite area ratio: 1.0 % or more and 40.0 % or less, tempered martensite area ratio: 50.0 % or less (including 0 %), retained austenite area ratio: 1.5 % or more, fresh martensite area ratio: 20.0 % or less (including 0 %), $S_{BF} + S_{TM} + 2 \times S_{MA}$: 10.0 % or more and less than 65.0 %, $S_{BF} + S_{TM}$: 3.0 % or more and 60.0 % or less, $S_{MA1}/S_{MA}$: 0.40 or less, IDR [%Cy]: 0.16 % or more, and tensile strength: 590 MPa or more and less than 980 MPa.

*FIG. 1A*

*FIG. 1B*

*FIG. 1C*

**Description**

TECHNICAL FIELD

The present disclosure relates to a galvanized steel sheet, a member made from the galvanized steel sheet, and methods for manufacturing same.

BACKGROUND

In recent years, enhancement of fuel efficiency of automobiles has become an important issue from the viewpoint of protecting the global environment. Therefore, there is a growing trend to reduce weight of automotive bodies by increasing strength and reducing thickness of steel sheets used as material of automotive members.

Further, in view of automotive body rust resistance, steel sheets used as material of automotive members are often galvanized. Therefore, development of galvanized steel sheets having high strength is also underway.

As an example of a steel sheet used as a material of an automotive member, Patent Literature (PTL) 1 describes:

"A high strength steel sheet comprising a chemical composition containing, in mass%,
C: 0.10 % to 0.24 %,
Mn: 3.50 % to 12.00 %,
Si: 0.005 % to 5.00 %,
Al: 0.005 % to 5.00 %,
P: 0.15 % or less,
S: 0.030 % or less,
N: 0.020 % or less,
O: 0.010 % or less,
Cr: 0 % to 5.00 %,
Mo: 0 % to 5.00 %,
Ni: 0 % to 5.00 %,
Cu: 0 % to 5.00 %,
Nb: 0 % to 0.50 %,
Ti: 0 % to 0.50 %,
W: 0 % to 0.50 %,
B: 0 % to 0.010 %,
Ca: 0 % to 0.05 %,
Mg: 0 % to 0.05 %,
Zr: 0 % to 0.05 %,
REM: 0 % to 0.05 %,
Sb: 0 % to 0.50 %,
Sn: 0 % to 0.50 %,
As: 0 % to 0.05 %, and
V: 0 % to 2.0 %,
with the balance being Fe and inevitable impurity,
wherein the metallic microstructure at a 1/4 sheet thickness position contains, in area percentage,
retained austenite: 10.0 % to 55.0 %,
high temperature tempered martensite: 30.0 % to 75.0 %,
low temperature tempered martensite: 15.0 % to 60.0 %,
with the balance being:

    fresh martensite: 0 % to 10.0 %,
    pearlite: 0 % to 5.0 %, and
    bainite: 0 % to 5.0 %,
    and having a tensile strength of 1,180 MPa or more."

PTL 2 describes:

"A steel sheet comprising a chemical composition containing, in mass%,
C: 0.020 % or more and 0.080 % or less,
Si: 0.01 % or more and 0.10 % or less,

Mn: 0.80 % or more and 1.80 % or less,

Al: more than 0.10 % and less than 0.40 %,

P: 0.0100 % or less,

S: 0.0150 % or less,

N: 0.0100 % or less,

Nb: 0.005 % or more and 0.095 % or less, Ti: 0.005 % or more and 0.095 % or less, and Nb and Ti in total: 0.030 % or more and 0.100 % or less,

with the balance being iron and inevitable impurity,

wherein the metallic microstructure consists of ferrite, bainite and other phases,

the other phases including pearlite, retained austenite, and martensite,

the area ratio of the ferrite is 80 % to 95 %,

the area ratio of the bainite is 5 % to 20 %,

the total fraction of the other phases is less than 3 %,

the equivalent circular diameter of cementite in the ferrite is 0.003 $\mu$m or more and 0.300 $\mu$m or less,

the number density of cementite in the ferrite is 0.02/$\mu$m$^2$ or more and 0.10/$\mu$m$^2$ or less,

tensile strength is 590 MPa or more, and

a fatigue strength ratio as fatigue strength to tensile strength is 0.45 or more.

PTL 3 describes:

"A high strength cold-rolled steel sheet comprising a chemical composition containing, in mass%,

C: 0.060 % to 0.250 %,

Si: 0.50 % to 1.80 %,

Mn: 1.00 % to 2.80 %,

P: 0.100 % or less,

S: 0.0100 % or less,

Al: 0.010 % to 0.100 %, and

N: 0.0100 % or less, with the balance being Fe and inevitable impurity,

wherein the steel microstructure contains ferrite at an area ratio of 50 % to 80 %, martensite at an area ratio of 8 % or less and an average grain size of 2.5 $\mu$m or less, retained austenite at an area ratio of 6 % to 15 %, and tempered martensite at an area ratio of 3 % to 40 %, wherein a ratio $f_M/f_M+_{TM}$ of the area ratio of the martensite $f_M$ to the total area ratio of the martensite and the tempered martensite $f_M+_{TM}$ is 50 % or less, and the standard deviation of the grain size of the martensite is 0.7 $\mu$m or less at a total of five locations: a center portion in the sheet transverse direction, end portions 50 mm from both ends in the sheet transverse direction, and portions midway between the center portion and the end portions in the sheet transverse direction.

CITATION LIST

Patent Literature

PTL 1: JP 6213696 B1

PTL 2: JP 5447741 B1

PTL 3: JP 6597938 B1

SUMMARY

(Technical Problem)

Automobile members include many members having complex shapes (hereinafter also referred to as "complex-shape members"), such as center pillar lower trims and under panels. Steel sheets that are used as material for such complex-shape members need to have excellent formability.

Formability here refers to resistance to fracturing during member forming and dimensional accuracy during member forming. Various types of fracture exist, such as $\alpha$ fractures, $\beta$ fractures, and bending fractures. For the material of a member that has a relatively simple shape, forming without fracturing may be possible by using a steel sheet specialized to resist a particular fracture type, depending on the shape of the member and other factors. However, for a complex-shape member, various types of deformation occur during forming. Therefore, a steel sheet used as a material for a complex-shape member needs to be resistant to various types of fracture. Among the properties of a steel sheet, ductility, hole expansion formability, and local ductility are particularly correlated with the occurrence of $\alpha$ fractures, $\beta$ fractures, and bending fractures, respectively. Further, strain hardenability correlates with general fracture occurrence.

However, in general, increasing the strength of a steel sheet reduces formability, for example reducing any or all of ductility, hole expansion formability, local ductility, and strain hardenability. Further, dimensional accuracy when forming a member is generally negatively correlated with tensile strength (hereinafter also referred to as TS) and yield stress (hereinafter also referred to as YS). Therefore, when a steel sheet is excessively strengthened, dimensional accuracy during member forming is also reduced. For the above reasons, steel sheets having a TS less than 590 MPa are currently being used as materials for complex-shape members.

In fact, the steel sheets described in PTL 1-3 do not have both high strength and excellent formability.

The present disclosure was developed in view of the current situation described above, and it would be helpful to provide a galvanized steel sheet having both high strength and excellent formability, and more specifically, excellent ductility, hole expansion formability, local ductility, strain hardenability, and dimensional accuracy when forming a member, together with an advantageous method for manufacturing same.

It would also be helpful to provide a member made from the galvanized steel sheet and a method for manufacturing same.

Here, high strength means that TS measured by tensile testing in accordance with Japanese Industrial Standard JIS Z 2241 satisfies the following formula.

$$590 \text{ MPa} \leq \text{TS} < 980 \text{ MPa}$$

Excellent ductility means that elongation after fracture (hereinafter also referred to as T-El) measured by tensile testing in accordance with JIS Z 2241 satisfies the following formula, depending on the TS measured by the tensile testing.

when

$$590 \text{ MPa} \leq \text{TS} < 780 \text{ MPa}, 30.0 \% \leq \text{T-El}$$

when

$$780 \text{ MPa} \leq \text{TS}, 19.0 \% \leq \text{T-El}$$

Excellent hole expansion formability means that maximum hole expansion ratio ($\lambda$) measured by a hole expanding test in accordance with JIS Z 2256 satisfies the following formula, depending on the TS measured by the tensile testing.

when

$$590 \text{ MPa} \leq \text{TS} < 780 \text{ MPa}, 45 \% \leq \lambda$$

when

$$780 \text{ MPa} \leq \text{TS}, 40 \% \leq \lambda$$

Excellent local ductility means that the local elongation (hereinafter also referred to as L-El), defined as the difference between the elongation after fracture measured by tensile testing in accordance with JIS Z 2241 and the total elongation at maximum test force, satisfies the following formula, depending on the TS measured by the tensile testing.

when

$$590 \text{ MPa} \leq \text{TS} < 780 \text{ MPa}, 10.0 \% \leq \text{L-El}$$

when

$$780 \text{ MPa} \leq \text{TS}, 7.0 \% \leq \text{L-El}$$

Excellent strain hardenability means that strain hardening index (hereinafter also referred to as n-value) measured by tensile testing in accordance with JIS Z 2241 satisfies the following formula, depending on the TS measured by the tensile testing.

when

$$590 \text{ MPa} \leq \text{TS} < 780 \text{ MPa}, 0.200 \leq \text{n-value}$$

when

$$780 \text{ MPa} \leq \text{TS}, 0.100 \leq \text{n-value}$$

Excellent dimensional accuracy when forming a member means that YS measured by tensile testing in accordance with JIS Z 2241 satisfies the following formula, depending on the TS measured by the tensile testing.

when

$$590 \text{ MPa} \leq \text{TS} < 780 \text{ MPa}, 500 \text{ MPa} \geq \text{YS}$$

when

$$780 \text{ MPa} \leq \text{TS}, 700 \text{ MPa} \geq \text{YS}$$

(Solution to Problem)

The inventors conducted intensive studies to solve the technical problem outlined above.
As a result, by appropriately adjusting a chemical composition of a base steel sheet of a galvanized steel sheet and microstructure of the base steel sheet of the galvanized steel sheet such that:

area ratio of ferrite: 35.0 % or more and 95.0 % or less,
area ratio of bainitic ferrite: 1.0 % or more and 40.0 % or less,
area ratio of tempered martensite: 50.0 % or less (including 0 %),
area ratio of retained austenite: 1.5 % or more,
area ratio of fresh martensite: 20.0 % or less (including 0 %),
$S_{BF} + S_{TM} + 2 \times S_{MA}$: 10.0 % or more and less than 65.0 %,
$S_{BF} + S_{TM}$: 3.0 % or more and 60.0 % or less,
$S_{MA1}/S_{MA}$: 0.40 or less, and
IDR [%Cy]: 0.16 % or more,
and by setting the tensile strength to be 590 MPa or more and less than 980 MPa, the inventors found that a galvanized steel sheet having both high strength and excellent formability is obtainable.
The present disclosure is based on these discoveries and further studies.

Primary features of the present disclosure are as follows.

1. A galvanized steel sheet comprising a base steel sheet and a galvanized layer on a surface of the base steel sheet, wherein
the base steel sheet comprises:

a chemical composition containing (consisting of), in mass%,

C: 0.040 % or more and 0.400 % or less,
Si: 0.20 % or more and 3.00 % or less,
Mn: 1.00 % or more and less than 2.80 %,
P: 0.001 % or more and 0.100 % or less,
S: 0.0200 % or less,
Al: 0.010 % or more and 2.000 % or less, and
N: 0.0100 % or less,
where carbon equivalent Ceq is less than 0.540 %, and the balance is Fe and inevitable impurity,
further, the base steel sheet has a microstructure wherein
area ratio of ferrite: 35.0 % or more and 95.0 % or less,
area ratio of bainitic ferrite: 1.0 % or more and 40.0 % or less,
area ratio of tempered martensite: 50.0 % or less (including 0 %),
area ratio of retained austenite: 1.5 % or more,
area ratio of fresh martensite: 20.0 % or less (including 0 %),
$S_{BF} + S_{TM} + 2 \times S_{MA}$: 10.0 % or more and less than 65.0 %,
$S_{BF} + S_{TM}$: 3.0 % or more and 60.0 % or less,
$S_{MA1}/S_{MA}$: 0.40 or less, and
IDR [%Cy]: 0.16 % or more,
and tensile strength is 590 MPa or more and less than 980 MPa,
wherein
$S_{BF}$ is area ratio of the bainitic ferrite,
$S_{TM}$ is area ratio of the tempered martensite,
$S_{MA}$ is area ratio of a hard secondary phase consisting of the retained austenite and fresh martensite,
$S_{MA1}$ is a total area ratio of island regions among island regions constituting the hard secondary phase that have a value of 1.0 $\mu$m or more for area divided by the maximum Feret diameter, and
IDR [%Cy] is a difference between the 90th percentile and the 10th percentile of the distribution of solute C concentration in the retained austenite.

2. The galvanized steel sheet according to aspect 1, wherein the chemical composition of the base steel sheet further contains, in mass%, at least one selected from the group consisting of:

Ti: 0.200 % or less,
Nb: 0.200 % or less,
V: 0.100 % or less,
B: 0.0100 % or less,
Cu: 1.000 % or less,
Cr: 1.000 % or less,
Ni: 1.000 % or less,
Mo: 0.500 % or less,
Sb: 0.200 % or less,
Sn: 0.200 % or less,
Ta: 0.100 % or less,
W: 0.500 % or less,
Mg: 0.0200 % or less,
Zn: 0.0200 % or less,
Co: 0.0200 % or less,
Zr: 0.0200 % or less,
Ca: 0.0200 % or less,
Ce: 0.0200 % or less,
Se: 0.0200 % or less,
Te: 0.0200 % or less,
Ge: 0.0200 % or less,
As: 0.0200 % or less,
Sr: 0.0200 % or less,
Cs: 0.0200 % or less,
Hf: 0.0200 % or less,
Pb: 0.0200 % or less,
Bi: 0.0200 % or less, and

REM: 0.0200 % or less.

3. The galvanized steel sheet according to aspect 1 or 2, wherein an amount of diffusible hydrogen of the base steel sheet is 0.50 mass ppm or less.

4. The galvanized steel sheet according to any one of aspects 1 to 3, further comprising a decarburized layer.

5. The galvanized steel sheet according to any one of aspects 1 to 4, further comprising a metal coating or plating layer at least on one side between the base steel sheet and the galvanized layer.

6. The galvanized steel sheet according to aspect 5, wherein the metal coating or plating layer is an Fe-based coating or plating layer.

7. The galvanized steel sheet according to any one of aspects 1 to 6, wherein the galvanized layer is a hot-dip galvanized layer or a galvannealed layer.

8. A member made using the galvanized steel sheet according to any one of aspects 1 to 7.

9. A method for manufacturing a galvanized steel sheet, the method comprising:

hot rolling a steel slab having the chemical composition according to aspect 1 or 2 to produce a hot-rolled steel sheet;

cold rolling the hot-rolled steel sheet to produce a cold-rolled steel sheet;

annealing the cold-rolled steel sheet at an annealing temperature of 760 °C or more and 900 °C or less for an annealing time of 20 s or more;

cooling the cold-rolled steel sheet to a first cooling stop temperature of 300 °C or more and 550 °C or less;

holding the cold-rolled steel sheet at a temperature range of 300 °C or more and 550 °C or less for 3 s or more to 600 s or less;

coating the cold-rolled steel sheet by a galvanizing treatment to produce a galvanized steel sheet;

cooling the galvanized steel sheet to a second cooling stop temperature of -20 °C or more and less than 300 °C; and

reheating the galvanized steel sheet to a reheating temperature of 300 °C or more and 500 °C or less, and holding the galvanized steel sheet at a temperature range of 300 °C or more and 500 °C or less for 10 s or more to 2,000 s or less, wherein

a relationship between the first cooling stop temperature and a temperature of a galvanizing bath in the galvanizing treatment satisfies the following Formula (1),

$$-80\ °C \leq T_0 - T_1 \leq 50\ °C \qquad \ldots (1)$$

where $T_0$ is the first cooling stop temperature (°C) and $T_1$ is the temperature of the galvanizing bath in the galvanizing treatment (°C).

10. The method for manufacturing a galvanized steel sheet according to aspect 9, wherein a dew point of the annealing is more than -30 °C.

11. The method for manufacturing a galvanized steel sheet according to aspect 9 or 10, further comprising applying a metal coating or plating treatment after the cold rolling, before the annealing, forming a metal coating or plating layer on at least one surface of the cold-rolled steel sheet.

12. The method for manufacturing a galvanized steel sheet according to aspect 11, wherein the metal coating or plating layer is an Fe-based coating or plating layer.

13. The method for manufacturing a galvanized steel sheet according to any one of aspects 9 to 12, wherein the galvanizing treatment is a hot-dip galvanizing treatment or a galvannealing treatment.

14. A method for manufacturing a member, wherein at least one of forming or joining is applied to the galvanized steel sheet according to any one of aspects 1 to 7 to manufacture the member.

(Advantageous Effect)

According to the present disclosure, a galvanized steel sheet is obtainable that combines high strength with excellent formability, specifically, excellent ductility, hole expansion formability, local ductility, strain hardenability, and dimensional accuracy when forming a member. Further, the galvanized steel sheet according to the present disclosure has high strength and excellent formability, and therefore may be applied very advantageously as a material for automobile members and the like that have complex shapes. A steel sheet that has excellent formability also has excellent anti-crash properties, and therefore the galvanized steel sheet according to the present disclosure may be very advantageously applied as a material for an impact energy absorbing member or the like of an automobile.

BRIEF DESCRIPTION OF THE DRAWINGS

In the accompanying drawings:

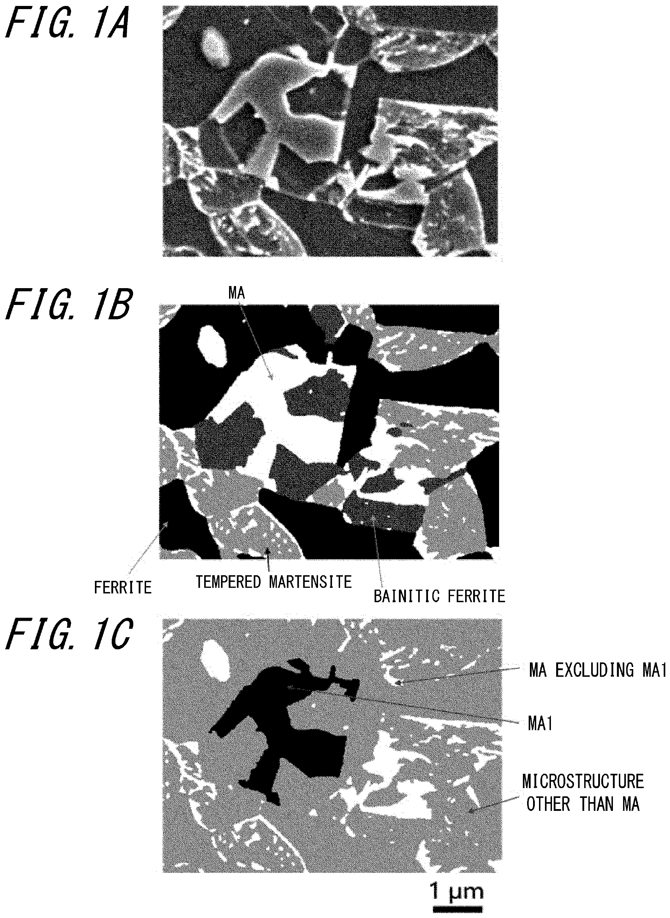

FIG. 1A illustrates an example of a microstructure image according to SEM used for microstructure identification; FIG. 1B illustrates the microstructure image of FIG. 1A color-coded using Adobe Photoshop by Adobe Systems Inc.; FIG. 1C illustrates an image of hard secondary phase (MA) island regions extracted from the microstructure image of FIG. 1A, with the island regions classified as MA1 and the island regions classified as other than MA1 color-coded using Adobe Photoshop by Adobe Systems Inc.;

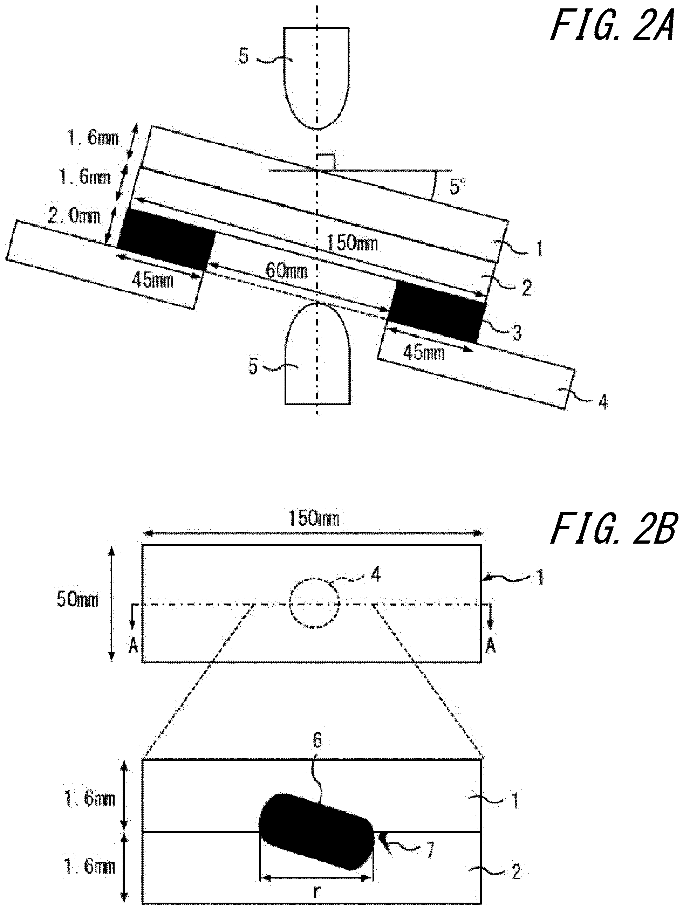

FIG. 2A is a schematic diagram illustrating a method of evaluating resistance weld crack resistance at a welded portion; an upper part of FIG. 2B illustrates a top view of a sheet combination after the resistance spot welding of the evaluation, and a lower part of FIG. 2B illustrates a cross section taken along the line A-A indicated in the upper part.

DETAILED DESCRIPTION

The following describes embodiments of the present disclosure.

[1] Galvanized steel sheet

[First, a chemical composition of a base steel sheet of a galvanized steel sheet according to an embodiment of the present disclosure is described. Hereinafter, although the unit in all chemical compositions is "mass%", this may be indicated simply as "%", unless otherwise specified.

C: 0.040 % or more and 0.400 % or less

C is an element effective for securing TS of 590 MPa or more, high ductility, and strain hardenability by generating appropriate amounts of fresh martensite, tempered martensite, bainitic ferrite, and retained austenite. Here, when C content is less than 0.040 %, an area ratio of ferrite increases, and achieving a TS of 590 MPa or more becomes difficult. Further, reduced ductility and strain hardenability may result. On the other hand, when the C content exceeds 0.400 %, carbon concentration in the retained austenite increases excessively. Therefore, when a steel sheet is blanked, hardness of fresh martensite formed from retained austenite increases significantly. As a result, crack propagation during hole expansion is accelerated in the steel sheet after the blanking (that is, a reduction in hole expansion formability results).
The C content is therefore 0.040 % or more and 0.400 % or less. The C content is preferably 0.070 % or more. Further, the C content is preferably 0.300 % or less.

Si: 0.20 % or more and 3.00 % or less

Si inhibits carbide formation during annealing and promotes formation of retained austenite. In other words, Si is an element that affects an area ratio of retained austenite and carbon concentration in the retained austenite. Here, when Si content is less than 0.20 %, the area ratio of retained austenite and IDR [%Cy] decrease, and ductility, local ductility, and strain hardenability are reduced. On the other hand, when the Si content exceeds 3.00 %, the area ratio of ferrite increases excessively and achieving a TS of 590 MPa or more becomes difficult. Further, the carbon concentration in the retained austenite increases excessively. Therefore, when a steel sheet is blanked, hardness of fresh martensite formed from retained austenite increases significantly. As a result, crack propagation during hole expansion is accelerated in the steel sheet after the blanking (that is, a reduction in hole expansion formability results).
Therefore, the Si content is 0.20 % or more and 3.00 % or less. The Si content is preferably 0.40 % or more. Further, there is concern about a decrease in resistance weld crack resistance when the Si content exceeds 2.00 %, and therefore the Si content is preferably 2.00 % or less.

Mn: 1.00 % or more and less than 2.80 %

Mn is an element that adjusts area ratios such as those of bainitic ferrite and tempered martensite. Here, when Mn content is less than 1.00 %, the area ratio of ferrite increases excessively, and achieving a TS of 590 MPa or more becomes difficult. On the other hand, when the Mn content is 2.80 % or more, the area ratios of ferrite and bainitic ferrite decrease. As a result, desired ductility is not achieved.
The Mn content is therefore 1.00 % or more and less than 2.80 %. The Mn content is preferably 1.10 % or more. Further, the Mn content is preferably less than 2.50 %.

P: 0.001 % or more and 0.100 % or less

P is an element that acts as a solid solution strengthener and increases steel sheet strength. To achieve this effect, P content is 0.001 % or more. On the other hand, when the P content exceeds 0.100 %, P segregates to prior austenite grain boundaries and embrittles the grain boundaries. Therefore, when steel sheets are blanked, an amount of void formation increases, leading to a decrease in hole expansion formability.

The P content is therefore 0.001 % or more and 0.100 % or less. The P content is preferably 0.030 % or less.

S: 0.0200 % or less

S is present in steel as sulfide. In particular, when S content exceeds 0.0200 %, steel sheet ultimate deformability is reduced. Therefore, when steel sheets are blanked, an amount of void formation increases, leading to a decrease in hole expansion formability.

The S content is therefore 0.0200 % or less. The S content is preferably 0.0080 % or less. A lower limit of the S content is not particularly specified. In view of production technology constraints, the S content is preferably 0.0001 % or more.

Al: 0.010 % or more and 2.000 % or less

Al inhibits carbide formation and promotes formation of retained austenite. In other words, Al is an element that affects the area ratio of retained austenite and the carbon concentration in the retained austenite. To obtain this effect, the Al content is 0.010 % or more. On the other hand, when the Al content exceeds 2.000 %, the area ratio of ferrite increases excessively, and achieving a TS of 590 MPa or more becomes difficult.

The Al content is therefore 0.010 % or more and 2.000 % or less. The Al content is preferably 0.015 % or more. Further, the Al content is preferably 1.000 % or less.

N: 0.0100 % or less

N is present in steel as nitride. In particular, when N content exceeds 0.0100 %, steel sheet ultimate deformability is reduced. Therefore, when steel sheets are blanked, an amount of void formation increases, leading to a decrease in hole expansion formability.

The N content is therefore 0.0100 % or less. Further, the N content is preferably 0.0050 % or less. A lower limit of the N content is not particularly specified. In view of production technology constraints, the N content is preferably 0.0005 % or more.

Carbon equivalent Ceq: less than 0.540 %

The carbon equivalent Ceq affects TS. In particular, when the carbon equivalent Ceq is 0.540 % or more, achieving a TS of less than 980 MPa becomes difficult. Further, obtaining excellent ductility, hole expansion formability, local ductility, and strain hardenability at the same time becomes difficult. The carbon equivalent Ceq is therefore less than 0.540 %. Further, the carbon equivalent Ceq is preferably 0.535 % or less. The carbon equivalent Ceq is more preferably 0.534 % or less. The carbon equivalent Ceq is even more preferably 0.530 % or less.

Here, the carbon equivalent Ceq is defined by the following formula.

Carbon equivalent Ceq = [C %] + ([Si %]/24) + ([Mn %]/6) + ([Ni %]/40) + ([Cr %]/5) + ([Mo %]/4) + ([V %]/14)

The [element symbol %] in the above formula represents the content (mass%) of the element in the chemical composition of the base steel sheet. Elements not included in the chemical composition of the base steel sheet are calculated as 0.

The base steel sheet of the galvanized steel sheet according to the present disclosure has a chemical composition containing the above components, with the balance being Fe (iron) and inevitable impurity. In particular, the base steel sheet of the galvanized steel sheet according to an embodiment of the present disclosure preferably has a chemical composition consisting of the above components, with the balance being Fe and inevitable impurity.

The basic chemical composition of the base steel sheet of the galvanized steel sheet according to an embodiment of the present invention has been described, but may further contain at least one selected from the group consisting of:

Ti: 0.200 % or less,

Nb: 0.200 % or less,
V: 0.100 % or less,
B: 0.0100 % or less,
Cu: 1.000 % or less,
Cr: 1.000 % or less,
Ni: 1.000 % or less,
Mo: 0.500 % or less,
Sb: 0.200 % or less,
Sn: 0.200 % or less,
Ta: 0.100 % or less,
W: 0.500 % or less,
Mg: 0.0200 % or less,
Zn: 0.0200 % or less,
Co: 0.0200 % or less,
Zr: 0.0200 % or less,
Ca: 0.0200 % or less,
Ce: 0.0200 % or less,
Se: 0.0200 % or less,
Te: 0.0200 % or less,
Ge: 0.0200 % or less,
As: 0.0200 % or less,
Sr: 0.0200 % or less,
Cs: 0.0200 % or less,
Hf: 0.0200 % or less,
Pb: 0.0200 % or less,
Bi: 0.0200 % or less, and
REM: 0.0200 % or less.

When any of the above optional additional elements are included below an appropriate lower limit described below, such an element is included as an inevitable impurity.

Ti: 0.200 % or less

Ti causes TS to increase due to formation of fine carbides, nitrides, and carbonitrides during hot rolling and annealing. To obtain this effect, Ti content is preferably 0.001 % or more. The Ti content is more preferably 0.005 % or more. On the other hand, when the Ti content exceeds 0.200 %, a large amount of coarse precipitates and inclusions may be formed. In such cases, when diffusible hydrogen is present in the steel sheet, the coarse precipitates and inclusions may become initiation points of cracks during hole expanding tests, that is, hole expansion formability may decrease. Therefore, when Ti is included, the Ti content is preferably 0.200 % or less. The Ti content is more preferably 0.060 % or less.

Nb: 0.200 % or less

Nb, like Ti, causes TS to increase due to formation of fine carbides, nitrides, and carbonitrides during hot rolling and annealing. To obtain this effect, Nb content is preferably 0.001 % or more. The Nb content is more preferably 0.005 % or more. On the other hand, when the Nb content exceeds 0.200 %, a large amount of coarse precipitates and inclusions may be formed. In such cases, when diffusible hydrogen is present in the steel sheet, the coarse precipitates and inclusions may become initiation points of cracks during hole expanding tests, that is, hole expansion formability may decrease. Therefore, when Nb is included, the Nb content is preferably 0.200 % or less. The Nb content is more preferably 0.060 % or less.

V: 0.100 % or less

V, like Ti and Nb, causes TS to increase due to formation of fine carbides, nitrides, and carbonitrides during hot rolling and annealing. To obtain this effect, V content is preferably 0.001 % or more. The V content is more preferably 0.005 % or more. On the other hand, when the V content exceeds 0.100 %, a large amount of coarse precipitates and inclusions may be formed. In such cases, when diffusible hydrogen is present in the steel sheet, the coarse precipitates and inclusions may become initiation points of cracks during hole expanding tests, that is, hole expansion formability may decrease. Therefore, when V is included, the V content is preferably 0.100 % or less. The V content is more preferably 0.060 % or less.

B: 0.0100 % or less

B is an element that increases hardenability by segregating at austenite grain boundaries. Further, B is an element that inhibits ferrite formation and grain growth during cooling after annealing. To obtain these effects, B content is preferably 0.0001 % or more. The B content is more preferably 0.0002 % or more. On the other hand, when the B content exceeds 0.0100 %, cracking may occur inside the steel sheet during hot rolling, which may reduce the ultimate deformability of the steel sheet. Further, the reduction in the ultimate deformability of the steel sheet increases an amount of voids generated when the steel sheet is blanked, leading to a reduction in hole expansion formability. Therefore, when B is included, the B content is preferably 0.0100 % or less. The B content is more preferably 0.0050 % or less.

Cu: 1.000 % or less

Cu is an element that increases hardenability. In particular, Cu is an element that is effective for adjusting the area ratio of hard fresh martensite and the like to a more suitable range, and thereby adjusting TS to a more suitable range. To obtain this effect, Cu content is preferably 0.005 % or more. The Cu content is more preferably 0.020 % or more. On the other hand, when the Cu content exceeds 1.000 %, the area ratio of fresh martensite increases excessively and TS becomes excessively high. Further, a large amount of coarse precipitates and inclusions may be formed. In such cases, when diffusible hydrogen is present in the steel sheet, the coarse precipitates and inclusions may become initiation points of cracks during tensile testing, that is, hole expansion formability may decrease. Therefore, when Cu is included, the Cu content is preferably 1.000 % or less. The Cu content is more preferably 0.200 % or less.

Cr: 1.000 % or less

Cr is an element that increases hardenability, and Cr is an element effective for formation of retained austenite and fresh martensite. To obtain these effects, Cr content is preferably 0.0005 % or more. In particular, from a viewpoint of achieving a more suitable range of TS, the Cr content is more preferably 0.010 % or more. On the other hand, when the Cr content exceeds 1.000 %, the area ratio of hard fresh martensite may increase excessively, leading to a decrease in hole expansion formability. Therefore, when Cr is included, the Cr content is preferably 1.000 % or less. Further, the Cr content is more preferably 0.250 % or less. The Cr content is even more preferably 0.100 % or less.

Ni: 1.000 % or less

Ni is an element that increases hardenability. Further, Ni is an element that is effective for adjusting the area ratio of retained austenite and fresh martensite to a more suitable range, and thereby adjusting TS to a more suitable range. To obtain this effect, Ni content is preferably 0.005 % or more. The Ni content is more preferably 0.020 % or more. On the other hand, when the Ni content exceeds 1.000 %, the area ratio of fresh martensite may increase excessively, and may cause reduced ductility and dimensional accuracy during forming. Further, a large amount of coarse precipitates and inclusions may be formed. In such cases, when diffusible hydrogen is present in the steel sheet, the coarse precipitates and inclusions may become initiation points of cracks during hole expanding tests, that is, hole expansion formability may decrease. Therefore, when Ni is included, the Ni content is preferably 1.000 % or less. The Ni content is more preferably 0.800 % or less.

Mo: 0.500 % or less

Mo is an element that increases hardenability. Further, Mo is an element effective for formation of hard fresh martensite and the like. To obtain this effect, Mo content is preferably 0.010 % or more. The Mo content is more preferably 0.030 % or more. On the other hand, when the Mo content exceeds 0.500 %, the area ratio of fresh martensite may increase excessively, leading to a decrease in hole expansion formability. Therefore, when Mo is included, the Mo content is preferably 0.500 % or less. The Mo content is more preferably 0.450 % or less. The Mo content is even more preferably 0.400 % or less.

Sb: 0.200 % or less

Sb is an element effective for inhibiting diffusion of C in the vicinity of the steel sheet surface during annealing and for controlling the formation of a soft layer in the vicinity of the steel sheet surface. To obtain these effects, Sb content is preferably 0.002 % or more. The Sb content is more preferably 0.005 % or more. On the other hand, when the Sb content exceeds 0.200 %, a soft layer is not formed in the vicinity of the steel sheet surface, which may lead to a decrease in hole expansion formability. Therefore, when Sb is included, the Sb content is preferably 0.200 % or less. The Sb content is more preferably 0.020 % or less.

Sn: 0.200 % or less

Sn, like Sb, is an element effective for inhibiting the diffusion of C in the vicinity of the steel sheet surface during annealing and for controlling the formation of a soft layer in the vicinity of the steel sheet surface. To obtain these effects, Sn content is preferably 0.002 % or more. The Sn content is more preferably 0.005 % or more. On the other hand, when the Sn content exceeds 0.200 %, a soft layer is not formed in the vicinity of the steel sheet surface, which may lead to a decrease in hole expansion formability. Therefore, when Sn is included, the Sn content is preferably 0.200 % or less. The Sn content is more preferably 0.020 % or less.

Ta: 0.100 % or less

Ta, like Ti, Nb, and V, causes TS to increase due to formation of fine carbides, nitrides, and carbonitrides during hot rolling and annealing. Further, Ta is partially solid-soluble in Nb carbides and Nb carbonitrides to form composite precipitates such as (Nb, Ta) (C, N). This inhibits coarsening of precipitates and stabilizes strengthening by precipitation. This improves TS. To obtain these effects, Ta content is preferably 0.001 % or more. On the other hand, when the Ta content exceeds 0.100 %, a large amount of coarse precipitates and inclusions may be formed. In such cases, when diffusible hydrogen is present in the steel sheet, the coarse precipitates and inclusions may become initiation points of cracks during hole expanding tests, that is, hole expansion formability may decrease. Therefore, when Ta is included, the Ta content is preferably 0.100 % or less.

W: 0.500 % or less

W is an element effective for increasing hardenability and adjusting TS to a more suitable range. To obtain these effects, W content is preferably 0.001 % or more. The W content is more preferably 0.030 % or more. On the other hand, when the W content exceeds 0.500 %, the area ratio of hard fresh martensite may increase excessively, leading to a decrease in hole expansion formability. Therefore, when W is included, the W content is preferably 0.500 % or less. The W content is more preferably 0.450 % or less. The W content is even more preferably 0.400 % or less.

Mg: 0.0200 % or less

Mg is an element effective for spheroidizing the shape of inclusions such as sulfides and oxides to improve steel sheet ultimate deformability and hole expansion formability. To obtain this effect, Mg content is preferably 0.0001 % or more. On the other hand, when the Mg content exceeds 0.0200 %, a large amount of coarse precipitates and inclusions may be formed. In such cases, when diffusible hydrogen is present in the steel sheet, the coarse precipitates and inclusions may become initiation points of cracks during hole expanding tests, that is, hole expansion formability may decrease. Therefore, when Mg is included, the Mg content is preferably 0.0200 % or less.

Zn: 0.0200 % or less

Zn is an element effective for spheroidizing the shape of inclusions to improve steel sheet ultimate deformability and hole expansion formability. To obtain this effect, Zn content is preferably 0.0010 % or more. On the other hand, when the Zn content exceeds 0.0200 %, a large amount of coarse precipitates and inclusions may be formed. In such cases, when diffusible hydrogen is present in the steel sheet, the coarse precipitates and inclusions may become initiation points of cracks during hole expanding tests, that is, hole expansion formability may decrease. Therefore, when Zn is included, the Zn content is preferably 0.0200 % or less.

Co: 0.0200 % or less

Co, like Zn, is an element effective for spheroidizing the shape of inclusions to improve steel sheet ultimate deformability and hole expansion formability. To obtain this effect, Co content is preferably 0.0010 % or more. On the other hand, when the Co content exceeds 0.0200 %, a large amount of coarse precipitates and inclusions may be formed. In such cases, when diffusible hydrogen is present in the steel sheet, the coarse precipitates and inclusions may become initiation points of cracks during hole expanding tests, that is, hole expansion formability may decrease. Therefore, when Co is included, the Co content is preferably 0.0200 % or less.

Zr: 0.0200 % or less

Zr, like Zn and Co, is an element effective for spheroidizing the shape of inclusions to improve steel sheet ultimate deformability and hole expansion formability. To obtain this effect, Zr content is preferably 0.0010 % or more. On the other hand, when the Zr content exceeds 0.0200 %, a large amount of coarse precipitates and inclusions may be formed. In such cases, when diffusible hydrogen is present in the steel sheet, the coarse precipitates and inclusions may become initiation points of cracks during hole expanding tests, that is, hole expansion formability may decrease. Therefore, when Zr is included, the Zr content is preferably 0.0200 % or less.

Ca: 0.0200 % or less

Ca is present in steel as inclusions. Here, when Ca content exceeds 0.0200 %, a large amount of coarse inclusions may be formed. In such cases, when diffusible hydrogen is present in the steel sheet, the coarse inclusions may become initiation points of cracks during hole expanding tests, that is, hole expansion formability may decrease. Therefore, when Ca is included, the Ca content is preferably 0.0200 % or less. The Ca content is more preferably 0.0020 % or less. A lower limit of Ca content is not particularly limited. The Ca content is preferably 0.0005 % or more. Further, in view of production technology constraints, the Ca content is more preferably 0.0010 % or more.

Ce: 0.0200 % or less, Se: 0.0200 % or less, Te: 0.0200 % or less, Ge: 0.0200 % or less, As: 0.0200 % or less, Sr: 0.0200 % or less, Cs: 0.0200 % or less, Hf: 0.0200 % or less, Pb: 0.0200 % or less, Bi: 0.0200 % or less, and REM: 0.0200 % or less

Ce, Se, Te, Ge, As, Sr, Cs, Hf, Pb, Bi, and rare earth metals (REM) are all elements effective for improving steel sheet local ductility and hole expansion formability. To achieve these effects, content of each of Ce, Se, Te, Ge, As, Sr, Cs, Hf, Pb, Bi, and REM is preferably 0.0001 % or more. On the other hand, when the content of any one of Ce, Se, Te, Ge, As, Sr, Cs, Hf, Pb, Bi, or REM exceeds 0.0200 %, a large amount of coarse precipitates and inclusions may form. In such cases, when diffusible hydrogen is present in the steel sheet, the coarse precipitates and inclusions may become initiation points of cracks during hole expanding tests, that is, hole expansion formability may decrease. Therefore, when at least one of Ce, Se, Te, Ge, As, Sr, Cs, Hf, Pb, Bi, or REM is included, the content thereof is preferably 0.0200 % or less.

Elements other than those described above are Fe and inevitable impurity.

That is, the base steel sheet of the galvanized steel sheet according to an embodiment of the present disclosure comprises:

a chemical composition containing, in mass%,
C: 0.040 % or more and 0.400 % or less,
Si: 0.20 % or more and 3.00 % or less,
Mn: 1.00 % or more and less than 2.80 %,
P: 0.001 % or more and 0.100 % or less,
S: 0.0200 % or less,
Al: 0.010 % or more and 2.000 % or less, and
N: 0.0100 % or less,
where the carbon equivalent Ceq is less than 0.540 %,
and optionally contains at least one selected from the group consisting of:

Ti: 0.200 % or less,
Nb: 0.200 % or less,
V: 0.100 % or less,
B: 0.0100 % or less,
Cu: 1.000 % or less,
Cr: 1.000 % or less,
Ni: 1.000 % or less,
Mo: 0.500 % or less,
Sb: 0.200 % or less,
Sn: 0.200 % or less,
Ta: 0.100 % or less,
W: 0.500 % or less,
Mg: 0.0200 % or less,

Zn: 0.0200 % or less,
Co: 0.0200 % or less,
Zr: 0.0200 % or less,
Ca: 0.0200 % or less,
Ce: 0.0200 % or less,
Se: 0.0200 % or less,
Te: 0.0200 % or less,
Ge: 0.0200 % or less,
As: 0.0200 % or less,
Sr: 0.0200 % or less,
Cs: 0.0200 % or less,
Hf: 0.0200 % or less,
Pb: 0.0200 % or less,
Bi: 0.0200 % or less, and
REM: 0.0200 % or less,
with the balance being Fe and inevitable impurity.

Steel microstructure of the base steel sheet of the galvanized steel sheet according to an embodiment of the present disclosure is described below.

The steel microstructure of the base steel sheet of the galvanized steel sheet according to an embodiment of the present disclosure has a steel microstructure wherein

area ratio of ferrite: 35.0 % or more and 95.0 % or less,
area ratio of bainitic ferrite: 1.0 % or more and 40.0 % or less,
area ratio of tempered martensite: 50.0 % or less (including 0 %),
area ratio of retained austenite: 1.5 % or more,
area ratio of fresh martensite: 20.0 % or less (including 0 %),
$S_{BF} + S_{TM} + 2 \times S_{MA}$: 10.0 % or more and less than 65.0 %,
$S_{BF} + S_{TM}$: 3.0 % or more and 60.0 % or less,
$S_{MA1}/S_{MA}$: 0.40 or less, and
IDR [%Cy]: 0.16 % or more.

Here,

$S_{BF}$ is area ratio of the bainitic ferrite,
$S_{TM}$ is area ratio of the tempered martensite,
$S_{MA}$ is area ratio of a hard secondary phase consisting of the retained austenite and fresh martensite,
$S_{MA1}$ is a total area ratio of island regions among island regions constituting the hard secondary phase that have a value of 1.0 μm or more for area divided by the maximum Feret diameter, and
IDR [%Cy] is a difference between the 90th percentile and the 10th percentile of the distribution of solute C concentration in the retained austenite.

The reasons for each of these limitations are described below.

Area ratio of ferrite: 35.0 % or more and 95.0 % or less

Soft ferrite is a phase that improves ductility and strain hardenability. From the viewpoint of securing high ductility and strain hardenability, the area ratio of ferrite is 35.0 % or more. The area ratio of ferrite is preferably 40.0 % or more. The area ratio of ferrite is more preferably 45.0 % or more. Further, from the viewpoint of securing a TS of 590 MPa or more, the area ratio of ferrite is 95.0% or less. The area ratio of ferrite is preferably 85.0 % or less. The area ratio of ferrite is more preferably 80.0 % or less.

Area ratio of bainitic ferrite: 1.0 % or more and 40.0 % or less

Bainitic ferrite is a phase formed after ferrite is formed and C, Mn, and the like are enriched in untransformed austenite. Further, bainitic ferrite has an intermediate hardness between soft ferrite and hard fresh martensite and the like, and is also an important phase for securing good ductility and hole expansion formability. In addition, bainitic ferrite is a useful phase for securing an appropriate amount of retained austenite and obtaining high IDR [%Cy] by utilizing further C diffusion from bainitic ferrite to untransformed austenite. Therefore, the area ratio of bainitic ferrite is 1.0 % or more. Further, the area ratio of bainitic ferrite is preferably 2.0 % or more. The area ratio of bainitic ferrite is more preferably 5.0 % or more. On the other hand, an excessive increase in the area ratio of bainitic ferrite decreases ductility and hole expansion formability. The area ratio of bainitic ferrite is therefore 40.0 % or less. Further, the area ratio of bainitic ferrite is preferably 35.0 % or less.

Area ratio of tempered martensite: 50.0 % or less (including 0 %)

Tempered martensite has an intermediate hardness between soft ferrite and hard fresh martensite and the like, and is a phase for securing good hole expansion formability. However, from the viewpoint of securing good ductility, the area ratio of tempered martensite is 50.0 % or less. Further, the area ratio of tempered martensite is preferably 45.0 % or less. A lower limit of the area ratio of tempered martensite is not particularly limited, and may be 0 %. The area ratio of tempered martensite, when $780\ MPa \le TS < 980\ MPa$, is preferably 5.0 % or more. The area ratio of tempered martensite, when $780\ MPa \le TS < 980\ MPa$, is more preferably 10.0 % or more. The area ratio of tempered martensite, when $590\ MPa \le TS < 780\ MPa$, is preferably 0.1 % or more. The area ratio of tempered martensite, when $590\ MPa \le TS < 780\ MPa$, is more preferably 0.2 % or more.

Area ratio of retained austenite: 1.5 % or more

From the viewpoint of obtaining good ductility, the area ratio of retained austenite is 1.5 % or more. The area ratio of retained austenite is preferably 2.0 % or more. The area ratio of retained austenite is more preferably 2.5 % or more. The area ratio of retained austenite is even more preferably 3.0 % or more. An upper limit of the area ratio of retained austenite is not particularly limited. The area ratio of retained austenite is preferably 20.0 % or less.

Area ratio of fresh martensite: 20.0 % or less (including 0 %)

From the viewpoint of securing good hole expansion formability, the area ratio of fresh martensite is 20.0 % or less. A lower limit of the area ratio of fresh martensite is not particularly limited, and may be 0 %. From the viewpoint of securing a TS of 590 MPa or more, the area ratio of fresh martensite is preferably 2.0 % or more.

Fresh martensite is martensite as quenched (not tempered).

The area ratio of residual microstructure other than the above is preferably 10.0 % or less. The area ratio of the residual microstructure is more preferably 5.0 % or less. Further, the area ratio of the residual microstructure may be 0 %.

The residual microstructure is not particularly limited, and may include carbides such as lower bainite, pearlite, cementite, and the like. The type of residual microstructure can be confirmed, for example, by observation with a scanning electron microscope (SEM).

Here, the area ratio of ferrite, bainitic ferrite, tempered martensite, and hard secondary phase (retained austenite + fresh martensite) is measured at a 1/4 sheet thickness position of the base steel sheet, as follows.

A sample is cut from the base steel sheet such that a thickness cross section parallel to the rolling direction of the base steel sheet becomes an observation plane. The observation plane of the sample is then mirror-polished using diamond paste. The observation plane of the sample is then polished using colloidal silica and etched with 3 vol% nital to reveal the microstructure.

Then, five views of a $25.6\ \mu m \times 17.6\ \mu m$ field of view of the observation plane of the sample are observed using a scanning electron microscope (SEM) at an accelerating voltage of 15 kV and $5,000\times$ magnification.

From an obtained microstructure image (see, for example, FIG. 1A), ferrite, bainitic ferrite, tempered martensite and hard secondary phase (retained austenite + fresh martensite) are identified as follows.

Ferrite: a black-colored area, blocky in morphology. Further, almost no iron-based carbides are encapsulated. However, when iron-based carbides are encapsulated, the area of ferrite also includes the area of the iron-based carbides. The same is also true for bainitic ferrite and tempered martensite, which are described below.

Bainitic ferrite: black to dark gray area, which may be blocky or irregular in morphology. Further, no or relatively few iron-based carbides are encapsulated.

Tempered martensite: gray area, irregular in morphology. Further, a relatively large number of iron-based carbides are encapsulated.

Hard secondary phase (retained austenite + fresh martensite): white to light gray area, irregular in morphology. Further, iron-based carbides are not encapsulated. When size is relatively large, the color gradually darkens farther away from an interface with other microstructure, and an interior may be dark gray.

Residual microstructure: lower bainite, pearlite, cementite, and other carbides mentioned above have morphology and the like as known in the art.

Next, the areas of the phases identified in the microstructure image are color-coded (converted to a 4-value image) using Adobe Photoshop by Adobe Systems Inc. (see, for example, FIG. 1B), and the area of each phase is calculated. Then, values are calculated by dividing the area of each phase (the total area of each phase) by the area of the observation area (25.6 $\mu$m × 17.6 $\mu$m), and multiplying by 100 for each of the five fields of view. For each phase (ferrite, bainitic ferrite, tempered martensite and hard secondary phase), the average of the values is then used as the area ratio. FIG. 1A is a partial image extracted from one field of view of an observation area (25.6 $\mu$m × 17.6 $\mu$m) of a sample, as a reference for the above description.

Further, the area ratio of retained austenite is measured as follows.

The base steel sheet is machine ground in the thickness direction (depth direction) to a 1/4 sheet thickness position, and then chemically polished with oxalic acid to prepare the observation plane. The observation plane is then observed by X-ray diffraction. CoK$\alpha$ radiation is used for incident X-rays to determine a ratio of diffraction intensity of the (200), (220) and (311) planes of fcc iron (austenite) to diffraction intensity of the (200), (211) and (220) planes of bcc iron, and a volume fraction of retained austenite is calculated from the ratio of diffraction intensity of each plane. Then, assuming that the retained austenite is uniform in three dimensions, the volume fraction of the retained austenite is taken as the area ratio of retained austenite.

Further, the area ratio of fresh martensite is obtained by subtracting the area ratio of retained austenite from the area ratio of hard secondary phase obtained as described above.

[area ratio of fresh martensite (%)] = [area ratio of hard secondary phase (%)] - [area ratio of retained austenite (%)]

Further, the area ratio of residual microstructure is obtained by subtracting the area ratio of ferrite, the area ratio of bainitic ferrite, the area ratio of tempered martensite, and the area ratio of hard secondary phase as determined above from 100 %.

[area ratio of residual microstructure (%)] = 100 - [area ratio of ferrite (%)] - [area ratio of bainitic ferrite (%)] - [area ratio of tempered martensite (%)] - [area ratio of hard secondary phase (%)]

$S_{BF} + S_{TM} + 2 \times S_{MA}$: 10.0 % or more and less than 65.0 %

From the viewpoint of securing TS less than 980 MPa and securing excellent ductility, hole expansion formability, local ductility and strain hardenability, $S_{BF} + S_{TM} + 2 \times S_{MA}$ is less than 65.0 %. $S_{BF} + S_{TM} + 2 \times S_{MA}$ is preferably less than 63.0 %. On the other hand, from the viewpoint of securing TS of 590 MPa or more, $S_{BF} + S_{TM} + 2 \times S_{MA}$ is 10.0 % or more. $S_{BF} + S_{TM} + 2 \times S_{MA}$ is preferably 15.0 % or more.

Here,

$S_{BF}$: area ratio of bainitic ferrite
$S_{TM}$: area ratio of tempered martensite
$S_{MA}$: area ratio of hard secondary phase consisting of retained austenite and fresh martensite.

$S_{BF} + S_{TM}$: 3.0 % or more and 60.0 % or less

Bainitic ferrite and tempered martensite have an intermediate hardness between soft ferrite and hard fresh martensite and the like, and are important phases for securing good ductility, hole expansion formability, and local ductility. From the viewpoint of securing good ductility, hole expansion formability and local ductility, $S_{BF} + S_{TM}$ is 3.0 % or more. Further, an excessive increase in bainitic ferrite and tempered martensite decreases ductility. $S_{BF} + S_{TM}$ is therefore 60.0 % or less.

$S_{MA1}/S_{MA}$: 0.40 or less

The hard secondary phase consisting of retained austenite and fresh martensite (hereinafter also referred to as MA) includes multiple island regions. Among such island regions, island regions having a value of 1.0 $\mu$m or more obtained by dividing area by the maximum Feret diameter (hereinafter also referred to as MA1) decrease hole expansion formability and local ductility. Further, MA1 has a low solute C concentration. That is, stability of the retained austenite in MA1 is low. Therefore, MA1 does not contribute to securing good ductility. Accordingly, $S_{MA1}/S_{MA}$, the ratio of the area ratio of MA1 to the area ratio of the hard secondary phase, is 0.40 or less. $S_{MA1}/S_{MA}$ is preferably 0.35 or less.

$S_{MA1}/S_{MA}$ is more preferably 0.30 or less. A lower limit of $S_{MA1}/S_{MA}$ is not particularly limited and may be 0.

Each island region is separated from other island regions of the hard secondary phase by a phase other than the hard secondary phase (each island region is in contact with a phase other than the hard secondary phase around an entire circumference of the island region). Further, specific shape of each island region is not particularly limited, and may be any of circular, elliptical, polygonal, ameboid (a shape extending in a plurality of irregular directions), and the like.

Here, $S_{MA1}$ is measured as follows.

Ferrite, bainitic ferrite, tempered martensite, and hard secondary phase (retained austenite + fresh martensite) are identified in a microstructure image (see, for example, FIG. 1A), as described above. Then, after color-coding (converting to a 4-value image) each phase using Adobe Photoshop by Adobe Systems Inc., the island regions of the hard secondary phase are extracted. The area and the maximum Feret diameter of each extracted island region is then determined using ImageJ, which is open source, and for each island region, the area is divided by the maximum Feret diameter. For each island region, the value obtained by dividing the area by the maximum Feret diameter is used to classify as MA1 or other, and the total area of island regions classified as MA1 is calculated. FIG. 1C illustrates an example of the color-coded classification of each extracted island region of the hard secondary phase into MA1 and other. Then, the total area of the island regions classified as MA1 is divided by the area of the observation area (25.6 $\mu$m $\times$ 17.6 $\mu$m), and multiplied by 100 (area ratio) for each of the five fields of view. The average of the values (area ratio) for the five fields of view of MA1 is then used as $S_{MA1}$.

The maximum Feret diameter is the maximum distance between parallel straight lines tangent to opposing contour lines of the island region. Further, FIG. 1A, 1B, and 1C are each partial images extracted from one field of view of an observation area (25.6 $\mu$m $\times$ 17.6 $\mu$m) of a sample, as a reference for the above explanation.

IDR [%Cy]: 0.16 % or more

The formability of a steel sheet is greatly affected by the stability of retained austenite, particularly by the concentration of solute C in the retained austenite. That is, retained austenite having a high solute C concentration transforms to hard martensite when a steel sheet is deformed by machining or the like. This distributes strain and improves local ductility. On the other hand, from the viewpoint of obtaining good strain hardenability, a large dispersion of the distribution of solute C concentration in the retained austenite is preferable. As a result of various studies, the inventors found that IDR [%Cy] is effective as an index for evaluating these factors comprehensively. IDR [%Cy] is the difference between the 90th percentile and the 10th percentile of the distribution of solute C concentration in retained austenite, or in other words, the interdecile range (IDR) of the distribution of solute C concentration in retained austenite. Here, when IDR [%Cy] is 0.16 % or more, in addition to good local ductility, good strain hardenability is also obtainable. The IDR [%Cy] is therefore 0.16 % or more. The IDR [%Cy] is preferably 0.18 % or more. The IDR [%Cy] is more preferably 0.20 % or more. An upper limit of IDR [%Cy] is not particularly limited. However, when retained austenite becomes excessively stable, retained austenite may remain without martensitic transformation until cracking occurs when a steel sheet is deformed by machining or the like. Therefore, the IDR [%Cy] is preferably 0.50 % or less. The IDR [%Cy] is more preferably 0.40 % or less.

Here, IDR [%Cy] is measured as follows.

In the same field of view as the aforementioned microstructure image (25.6 $\mu$m $\times$ 17.6 $\mu$m), a two-dimensional distribution of C concentration in the base steel sheet is measured in five fields of view using a field emission electron probe microanalyzer (FE-EPMA). The measurement by FE-EPMA is performed after finish polishing, before etching. The FE-EPMA measurement may be performed with a wider field of view, and the same field of view area (25.6 $\mu$m $\times$ 17.6 $\mu$m) may be extracted from the microstructure image in a later procedure. The quantitative accuracy of the two-dimensional distribution of C concentration is 0.020 % or less, and the resolution is 0.10 $\mu$m or less. The step size is 0.05 $\mu$m, and the same step size is used in all five fields of view to perform point analysis of C concentration in a uniform grid pattern across the entire field of view. Then, the data for each measurement point of C concentration is integrated for the five fields of view. Then, from the integrated data, data in which the C concentration is above the (100 - Sy) percentile is extracted, and the extracted data is used as the measurement point data of solute C concentration in retained austenite to obtain the distribution of solute C concentration in retained austenite. Here, Sy is the area ratio (%) of retained austenite measured by the aforementioned measurement method. However, upon determining from the same field of view of the microstructure image that other microstructures having high C concentration, such as carbides, pearlite, and the like, are present in addition to retained austenite and fresh martensite, then before integrating the data for each C concentration measurement point for five fields of view, the measurement point data in the area occupied by such a high C concentration microstructure is replaced with a negative value (for example, -1). This excludes the measurement point data in the microstructure having such a high C concentration from the measurement point data of the solute C concentration of retained austenite. Ferrite, bainitic ferrite, tempered martensite, and fresh martensite have lower C concentrations than retained austenite. Therefore, by extracting only the data where the C concentration is above the (100 - Sy) percentile from the total data of C concentration measurement points, the measurement point data in the above phases (ferrite, bainitic ferrite, tempered martensite, and fresh martensite) are effectively excluded from the measurement point data for solute C concentration in retained austenite.

Then, the 90th percentile and 10th percentile of the measurement point data of solute C concentration in retained austenite (distribution of solute C concentration in retained austenite) are obtained, and the difference between them is taken to obtain IDR [%Cy],

The percentile here refers to the percentile as defined in JIS Z 8101.

Further, in the base steel sheet of the galvanized steel sheet according to an embodiment of the present disclosure, an amount of diffusible hydrogen is preferably 0.50 mass ppm or less.

Amount of diffusible hydrogen of base steel sheet: 0.50 mass ppm or less

From the viewpoint of obtaining better hole expansion formability, an amount of diffusible hydrogen of the base steel sheet is preferably 0.50 mass ppm or less. Further, the amount of diffusible hydrogen of the base steel sheet is more preferably 0.35 mass ppm or less. A lower limit of the amount of diffusible hydrogen of the base steel sheet is not particularly specified and may be 0 mass ppm. Further, in view of production technology constraints, the amount of diffusible hydrogen of the base steel sheet is preferably 0.01 mass ppm or more.

Here, the amount of diffusible hydrogen of the base steel sheet is measured as follows.

A test piece 30 mm long and 5 mm wide is taken from a galvanized steel sheet, and the galvanized layer is removed with alkali. Then, an amount of hydrogen released from the test piece is measured by a thermal desorption analysis method. Specifically, the test piece is continuously heated from room temperature to 300 °C at a rate of 200 °C/h, and then cooled to room temperature. At this time, the amount of hydrogen released from the test piece in the temperature range from room temperature to 210 °C during the continuous heating is measured (cumulative hydrogen amount). The measured hydrogen amount is then divided by the mass of the test piece (after removal of the galvanized layer, before continuous heating), and a value converted to mass ppm units is the amount of diffusible hydrogen of the base steel sheet.

For a product (member) after forming or joining of galvanized steel sheets, a test piece is cut from the product under a general operating environment and the amount of diffusible hydrogen of the base steel sheet is measured as described above. When the value is 0.50 mass ppm or less, the amount of diffusible hydrogen of the base steel sheet of the galvanized steel sheet at a material stage before the forming or joining may also be considered to be 0.50 mass ppm or less.

Further, the galvanized steel sheet according to an embodiment of the present disclosure preferably has a decarburized layer. In particular, the base steel sheet of the galvanized steel sheet according to an embodiment of the present disclosure preferably has a decarburized layer. Cracking due to liquid metal embrittlement (LME) during resistance spot welding may be a problem for steel sheets containing Si, especially for coated or plated steel sheets in which the base steel sheet has a high Si content. However, when the galvanized steel sheet has a decarburized layer, particularly in a surface layer of the base steel sheet, resistance weld crack resistance may be improved even when the base steel sheet has a high Si content.

Thickness of the decarburized layer, in other words, depth in the thickness direction from the surface of the base steel sheet, is preferably 30 $\mu$m or more. Thickness of the decarburized layer is more preferably 40 $\mu$m or more. Although an upper limit of the thickness of the decarburized layer is not particularly limited, the thickness of the decarburized layer is preferably 130 $\mu$m or less in order to keep tensile strength within a good range. Here, the decarburized layer is defined as a region where the C concentration of the base steel sheet is 80 % or less of that of the C content of the chemical composition of the base steel sheet, according to analysis of the C concentration of the base steel sheet in the thickness direction from the surface of the base steel sheet. The thickness of the decarburized layer is defined as the thickness of the region.

Further, the thickness of the decarburized layer is measured by surface or line analysis of element distribution in the vicinity of the surface layer of the base steel sheet using an electron probe microanalyzer (EPMA) on a cross sectioned sample. First, a resin-embedded galvanized steel sheet is polished and a vertical section in the rolling direction is finished for observation, and then removed from the resin to be used as a sample for measurement. The accelerating voltage is 7 kV and the irradiation current is 50 nA. Surface analysis or line analysis of the sample cross section is performed in 1 $\mu$m steps over a 300 $\mu$m $\times$ 300 $\mu$m area including a topmost surface layer of the base steel sheet to measure C intensity. In order to inhibit contamination, hydrocarbons on and around the sample surface are removed by a plasma cleaner in the measurement room and sample preparation room before the start of measurement. To inhibit the accumulation of hydrocarbons during the measurement, the measurement is performed while the sample is heated to and held at a maximum sample temperature of 100 °C on a stage. The C intensity is converted to a C concentration (in mass%) using a calibration curve prepared by performing measurements on a standard sample separately. The next step is to confirm that the lower limit of C detection is sufficiently lower than 0.10 mass% due to the effect of contamination control. Details of equipment used and the method of contamination control are described in Reference 1 below.

Reference 1: Yamashita et al., "Distribution of Carbon in Low-Carbon Steel in the Early Phase of Proeutectoid Ferrite by High Precision FE-EPMA," Iron and Steel, Vol. 103 (2017) No. 11., pp.14-20

However, the above configuration is not necessarily required because the necessity of contamination countermeasures during measurement depends on the machine model used and conditions. In other words, the measurement conditions are only required to confirm that sufficient accuracy has been obtained, and the measurement conditions are not intrinsically related to the effect of the present disclosure.

In the C concentration map obtained, a line profile in the thickness direction is extracted from the surface of the base steel sheet and averaged over 300 points in the direction parallel to the base steel sheet surface to obtain a profile of C concentration in the thickness direction. The obtained profile of C concentration in the thickness direction is smoothed by a simple moving average method. In this case, the number of smoothing points is preferably about 21. The thickness of the decarburized layer is then determined by identifying the range in the thickness direction where the C concentration in the intensity profile after the smoothing treatment is 80 % or less of that of the C content of the chemical composition of the base steel sheet.

Mechanical properties of the galvanized steel sheet according to an embodiment of the present disclosure are described below.

Tensile strength (TS): 590 MPa or more and less than 980 MPa

The tensile strength of the galvanized steel sheet according to an embodiment of the present disclosure is 590 MPa or more. However, when the steel sheet is excessively strengthened, securing excellent formability becomes difficult. Accordingly, the tensile strength of the galvanized steel sheet according to an embodiment of the present disclosure is less than 980 MPa.

The elongation after fracture (T-El), maximum hole expansion ratio ($\lambda$), local elongation (L-El), strain hardening index (n-value), and yield stress (YS) of the galvanized steel sheet according to an embodiment of the present disclosure are as described above.

Further, tensile strength (TS), elongation after fracture (T-El), local elongation (L-El), strain hardening index (n-value), and yield stress (YS) are measured by tensile testing in accordance with JIS Z 2241, as described later in reference to Examples. The maximum hole expansion ratio ($\lambda$) is measured by a hole expanding test in accordance with JIS Z 2256, as described later in reference to Examples.

Further, the galvanized layer of the galvanized steel sheet according to an embodiment of the present disclosure may be provided on only one surface of the base steel sheet, and may be provided on both surfaces.

The galvanized layer here refers to a coating layer in which Zn is the main component (Zn content of 50 mass % or more), for example, a hot-dip galvanized layer or a galvannealed layer.

Here, for example, the hot-dip galvanized layer being composed of Zn, Fe: 20 mass% or less, and Al: 0.001 mass% or more and 1.0 mass% or less is appropriate. Further, the hot-dip galvanized layer may optionally contain one or more elements selected from the group consisting of Pb, Sb, Si, Sn, Mg, Mn, Ni, Cr, Co, Ca, Cu, Li, Ti, Be, Bi, and REM, totaling 0 mass% or more and 3.5 mass% or less. Further, the Fe content of the hot-dip galvanized layer is more preferably less than 7 mass%. Other than the above elements, the balance is inevitable impurity.

Further, for example, the galvannealed layer being composed of Fe: 20 mass% or less and Al: 0.001 mass% or more and 1.0 mass% or less is appropriate. Further, the galvannealed layer may optionally contain one or more elements selected from the group consisting of Pb, Sb, Si, Sn, Mg, Mn, Ni, Cr, Co, Ca, Cu, Li, Ti, Be, Bi, and REM, totaling 0 mass% or more and 3.5 mass% or less. The Fe content of the galvannealed layer is more preferably 7 mass% or more. The Fe content of the galvannealed layer is even more preferably 8 mass% or more. Further, the Fe content of the galvannealed layer is more preferably 15 mass% or less. The Fe content of the galvannealed layer is even more preferably 12 mass% or less. Other than the above elements, the balance is inevitable impurity.

Further, a coating weight per side of the galvanized layer is not particularly limited. The coating weight per side of the galvanized layer is preferably 20 g/m$^2$ to 80 g/m$^2$.

The coating weight of the galvanized layer is measured as follows.

A coating solution is prepared by adding 0.6 g of a corrosion inhibitor for Fe ("IBIT® 700BK" (IBIT is a registered trademark in Japan, other countries, or both) manufactured by Asahi Chemical Co., Ltd.) to 1 L of a 10 mass% hydrochloric acid aqueous solution. Then, the galvanized steel sheet to be the test piece is immersed in the coating solution to dissolve the galvanized layer. Mass loss of the test piece before and after dissolving is measured, and the value is divided by the surface area of the base steel sheet (surface area of a coated portion) to calculate the coating weight (g/m$^2$).

Further, the galvanized steel sheet according to an embodiment of the present disclosure may have a metal coating or plating layer other than the galvanized layer at least on one side between the base steel sheet and the galvanized layer. The metal coating or plating layer contributes to an improvement in resistance weld crack resistance. Formation of the metal coating or plating layer inhibits resistance weld cracking even when the Si content of the base steel sheet is high. Although a mechanism by which the metal coating or plating layer improves resistance weld crack resistance is not necessarily clear, the inventors understand that when the metal coating or plating layer is between the base steel sheet and the galvanized layer, or in other words on the surface of the base steel sheet, the metal coating or plating layer acts as a barrier layer that hinders the zinc in the galvanized layer from melting and penetrating into the base steel sheet during resistance spot welding, thereby making resistance weld cracking less likely to occur (zinc penetration inhibition effect). When the galvanized layer is provided on both sides of the base steel sheet, the metal coating or plating layer may be between the base steel sheet and the galvanized layer on only one side, and may be between the base steel sheet and the galvanized layer on both sides.

Here, the coating weight of the metal coating or plating layer is preferably more than $0 \text{ g/m}^2$. The coating weight of the metal coating or plating layer is more preferably $2.0 \text{ g/m}^2$ or more. An upper limit of the coating weight of the metal coating or plating layer per side is not particularly limited. In view of cost, the coating weight of metal coating or plating layer is preferably $60 \text{ g/m}^2$ or less. The coating weight of the metal coating or plating layer is more preferably $50 \text{ g/m}^2$ or less. The coating weight of the metal coating or plating layer is even more preferably $40 \text{ g/m}^2$ or less. The coating weight of the metal coating or plating layer is even more preferably $30 \text{ g/m}^2$ or less. Here, the coating weight of the metal coating or plating layer is per side.

The coating weight of the metal coating or plating layer is measured as follows. A $10 \text{ mm} \times 15 \text{ mm}$ size sample is taken from the galvanized steel sheet and embedded in resin to make a cross sectional embedded sample. The thickness of the metal coating or plating layer is measured at three arbitrary locations on the cross section of the sample using a scanning electron microscope (SEM) at an accelerating voltage of 15 kV and $2,000\times$ to $10,000\times$ magnification, depending on the thickness of the metal coating or plating layer, and the average value of the three locations is calculated. The calculated average value is then multiplied by the relative density of the metal constituting the metal coating or plating layer to convert to the coating weight per side of the metal coating or plating layer.

As a metal used for the metal coating or plating layer, a metal having a higher melting point than Zn is desirable. For example, Fe, Ni, and the like may be used. Further, in addition to the zinc penetration inhibition effect, the metal coating or plating layer is preferably Fe-based, because a toughness reduction inhibition effect described below may be expected.

When an amount of Si in the vicinity of the surface of the base steel sheet is high, this may reduce toughness of a weld and thereby decrease resistance weld crack resistance. On the other hand, when the Fe-based coating or plating layer is between the base steel sheet and the galvanized layer, that is, the surface of the base steel sheet has the Fe-based coating or plating layer, the Fe-based coating or plating layer acts as a solute Si deficient layer, and the amount of Si forming a solute in a welded portion decreases. This may inhibit the decrease in toughness of the welded portion and improve the resistance weld crack resistance in the welded portion (toughness reduction inhibition effect). Further, the Fe-based coating or plating layer also functions as a soft layer and relaxes stress applied to the steel sheet surface during resistance spot welding. This may reduce residual stress in the welded portion and improve the resistance weld crack resistance (stress relaxation effect).

The Fe-based coating or plating layer may be an Fe (pure Fe) coating or plating layer, and may be an alloy coating or plating layer such as one formed from Fe-B alloy, Fe-C alloy, Fe-P alloy, Fe-N alloy, Fe-O alloy, Fe-Ni alloy, Fe-Mn alloy, Fe-Mo alloy, Fe-W alloy, and the like. The chemical composition of the Fe-based coating or plating layer is not particularly limited as long as the Fe content is 50 mass% or more. In particular, a chemical composition consisting of Fe and inevitable impurity, and a chemical composition containing one or more elements selected from the group consisting of B, C, P, N, O, Ni, Mn, Mo, Zn, W, Pb, Sn, Cr, V, and Co totaling 10 mass% or less, with the balance being Fe and inevitable impurity, are preferable. When an element other than Fe is included, the total content of the one or more elements is preferably 10 mass% or less to help prevent a decrease in electrolytic efficiency and to form an Fe-based coating or plating layer, in particular an Fe-based electroplating layer, at low cost. In the case of Fe-C alloy, the C content is preferably 0.08 mass% or less.

Further, the galvanized steel sheet according to an embodiment of the present disclosure may have a metal coating or plating layer and a decarburized layer at the same time (that is, from the surface of the galvanized steel sheet, the galvanized layer, the metal coating or plating layer, and the decarburized layer (surface layer of the base steel sheet) in that order). This may further improve the resistance weld crack resistance. When there is a metal coating or plating layer, the thickness of the decarburized layer (depth in the thickness direction from the surface of the base steel sheet) may be evaluated by analyzing the C concentration from the surface of the metal coating or plating layer or an interface between the galvanized layer and the cold-rolled steel sheet in the direction of the sheet thickness by the method described above.

The thickness of the galvanized steel sheet according to an embodiment of the present disclosure is not particularly limited. The thickness of the galvanized steel sheet is preferably 0.3 mm or more. The thickness of the galvanized steel sheet is preferably 3.0 mm or less.

[2] Member

A member according to an embodiment of the present disclosure is described below.
The member according to an embodiment of the present disclosure is a member manufactured using the galvanized steel sheet described above as a material. For example, the material, the galvanized steel sheet, is subjected to at least one of forming or joining to manufacture the member.
Here, the galvanized steel sheet has a TS of 590 MPa or more and less than 980 MPa, and excellent formability. Therefore, the member according to an embodiment of the present disclosure is particularly suitable for application as a complex-shape member for use in the automotive field.

[3] Method for manufacturing galvanized steel sheet

A method for manufacturing a galvanized steel sheet according to an embodiment of the present disclosure is described below.
The method for manufacturing a galvanized steel sheet according to an embodiment of the present disclosure comprises:

hot rolling a steel slab having the chemical composition described above to produce a hot-rolled steel sheet;
cold rolling the hot-rolled steel sheet to produce a cold-rolled steel sheet;
annealing the cold-rolled steel sheet at an annealing temperature of 760 °C or more and 900 °C or less for an annealing time of 20 s or more;
cooling the cold-rolled steel sheet to a first cooling stop temperature of 300 °C or more and 550 °C or less;
holding the cold-rolled steel sheet at a temperature range of 300 °C or more and 550 °C or less for 3 s or more to 600 s or less;
coating the cold-rolled steel sheet by a galvanizing treatment to produce a galvanized steel sheet;
cooling the galvanized steel sheet to a second cooling stop temperature of -20 °C or more and less than 300 °C; and
reheating the galvanized steel sheet to a reheating temperature of 300 °C or more and 500 °C or less, and holding the galvanized steel sheet at a temperature range of 300 °C or more and 500 °C or less for 10 s or more to 2,000 s or less, wherein
a relationship between the first cooling stop temperature and a temperature of a galvanizing bath in the galvanizing treatment satisfies the following Formula (1).

$$-80 \ ^\circ C \leq T_0 - T_1 \leq 50 \ ^\circ C \qquad \ldots (1)$$

Here, $T_0$ is the first cooling stop temperature (°C) and $T_1$ is the temperature of the galvanizing bath in the galvanizing treatment (°C).
Unless otherwise specified, each of temperatures above refers to a surface temperature of the steel slab or the steel sheet.
First, a steel slab having the chemical composition described above is prepared. For example, steel material is melted to produce molten steel having the chemical composition described above. The steelmaking method is not particularly limited, and any known steelmaking method may be used, such as using a converter, electric furnace, and the like. Obtained molten steel is then solidified into a steel slab. The method of obtaining a steel slab from molten steel is not particularly limited. For example, continuous casting, ingot making, and thin slab casting methods may be used. A continuous casting method is preferred from the viewpoint of hindering macro-segregation.

[Hot rolling]

The steel slab is then hot rolled to obtain a hot-rolled steel sheet.
An energy saving process may be applied to the hot rolling. Energy saving processes include hot charge rolling (where a steel slab is charged into a furnace as a warm slab without cooling to room temperature and then hot rolled) and direct rolling (where a steel slab is hot rolled immediately after being subjected to heat retaining for a short period).
There are no particular limitations on hot rolling conditions. For example, hot rolling may be performed under the following conditions.
The steel slab is temporarily cooled to room temperature and then reheated before rolling. The slab heating temperature (reheating temperature) is preferably 1,100 °C or more in view of carbide dissolution and reduced rolling load. The slab heating temperature is preferably 1,300 °C or less, in order to prevent increased scale loss. The slab heating temperature is based on the temperature of the steel slab surface.

The steel slab is then subjected to rough rolling according to a conventional method to produce a rough-rolled sheet (hereinafter also referred to as a sheet bar). The sheet bar is then subjected to finish rolling to produce a hot-rolled steel sheet. When the slab heating temperature is low, heating the sheet bar using a bar heater or the like before finish rolling is preferable, from the viewpoint of preventing trouble during finish rolling. The rolling finish temperature is preferably the $Ar_3$ transformation temperature or more, in order to reduce rolling load. Further, the rolling finish temperature is preferably the $Ar_3$ transformation temperature or more because a high rolling reduction rate in an unrecrystallized state of austenite may result in the development of an abnormal microstructure elongated in the rolling direction, which may reduce the workability of the annealed sheet. The $Ar_3$ transformation temperature is determined by the following formula.

$$Ar_3 \ (°C) = 868 - 396 \times [C \ \%] + 25 \times [Si \ \%] - 68 \ [Mn \ \%]$$

The [element symbol %] in the above formula represents the content (mass%) of the element in the chemical composition of the base steel sheet.

Sheet bars may be joined together during hot rolling, and finish rolling may be performed continuously. Further, the sheet bar may be temporarily coiled before finish rolling. Further, at least part of finish rolling may be conducted as lubrication rolling to reduce rolling load in the hot rolling. Conducting lubrication rolling in such a manner is effective from the perspective of making the shape and material properties of the steel sheet uniform. In lubrication rolling, the coefficient of friction is preferably 0.10 or more. The coefficient of friction is preferably 0.25 or less.

In the hot rolling, which includes rough rolling and finish rolling, a steel slab is generally turned into a sheet bar by rough rolling and into a hot-rolled steel sheet by finish rolling. However, depending on mill capacity and other factors, there is no need to be concerned with such classification as long as the defined size is obtained.

The rolling finish temperature is preferably 800 °C or more and 950 °C or less. The rolling finish temperature being 800 °C or more makes the steel microstructure at the hot-rolled steel sheet stage and, consequently, the steel microstructure of the final product more likely to be uniform. Uneven steel microstructure tends to reduce bendability. On the other hand, when the rolling finish temperature is more than 950 °C, the amount of oxide (scale) formation increases. As a result, an interface between the steel substrate and oxide may be roughened, and the surface quality of the steel sheet after pickling and cold rolling may deteriorate. Further, coarse crystal grains may also cause a reduction in the strength and bendability of a steel sheet.

After finish rolling, the hot-rolled steel sheet is coiled. The coiling temperature is preferably 450 °C or more. The coiling temperature is preferably 750 °C or less.

[Pickling]

After the hot rolling, the hot-rolled steel sheet is optionally pickled. Pickling may remove oxides from the steel sheet surface, securing good chemical convertibility and coating or plating quality. Pickling may be performed in one or more batches. Pickling conditions are not particularly limited, and a conventional method may be followed.

[Cold rolling]

The hot-rolled steel sheet is then subjected to cold rolling to obtain a cold-rolled steel sheet. Cold rolling is performed by multi-pass rolling that requires two or more passes, for example, tandem-type multi-stand rolling, reverse rolling and the like.

The rolling reduction of the cold rolling is not particularly limited. The rolling reduction of the cold rolling is preferably 20 % or more. The rolling reduction of the cold rolling is preferably 80 % or less. When the rolling reduction of the cold rolling is less than 20 %, coarsening and non-uniformity of the steel microstructure is more likely to occur during the annealing, which may result in reduced strength and workability in the final product. On the other hand, when the rolling reduction of the cold rolling exceeds 80 %, the steel sheet may be prone to shape defects and the coating weight of the galvanized coating may become uneven.

Further, the cold-rolled steel sheet obtained after cold rolling may be subjected to pickling.

[Metal coating or plating treatment]

In the method for manufacturing the galvanized steel sheet according to an embodiment of the present disclosure, a metal coating or plating treatment to form a metal coating or plating layer on at least one surface of the cold-rolled steel sheet obtained as described above may optionally be applied after the cold rolling, before the annealing described below. A cold-rolled steel sheet that has a metal coating or plating layer on at least one surface before undergoing the annealing described below may hereinafter be referred to as a metal coated or plated steel sheet. The metal coating or plating treatment method is not particularly limited, but electroplating is preferred from the viewpoint of manufacturability. A sulfuric acid bath, a hydrochloric acid bath, a mixed solution thereof, and the like may be used as a metal plating bath. In the case of electroplating, the coating weight of the metal plating layer may be adjusted by energization time and the like. As mentioned above, a metal coated or plated steel sheet means a steel sheet that has a metal coating or plating layer on at least one surface of the cold-rolled steel sheet before the annealing described below, and does not exclude a cold-rolled steel sheet that is pre-annealed before the metal coating or plating treatment.

As a metal used in the metal coating or plating treatment, a metal having a higher melting point than Zn is desirable, for example, Fe, Ni, and the like may be used. Further, formation of the Fe-based coating or plating layer is a preferred result of the metal coating or plating treatment, as an improved effect of resistance weld crack resistance may be expected.

Further, in addition to Fe ions, the coating or plating bath to form the Fe-based coating or plating layer may contain one or more elements selected from the group consisting of B, C, P, N, O, Ni, Mn, Mo, Zn, W, Pb, Sn, Cr, V, and Co. The total content of these elements in the coating or plating bath is preferably 10 mass% or less of the chemical composition of the metal coating or plating layer of the metal coated or plated steel sheet. Metallic elements may be included as metal ions, while non-metallic elements may be included as part of, for example, boric acid, phosphoric acid, nitric acid, or organic acid. Further, an iron sulfate plating solution may also contain conductivity aids such as sodium sulfate and potassium sulfate, chelating agents, and pH buffers.

As a pretreatment prior to the metal coating or plating treatment, degreasing and water washing may be performed to clean the surface of the cold-rolled steel sheet, and pickling and water washing may also be performed to activate the surface of the cold-rolled steel sheet. Following the pretreatment, the metal coating or plating treatment described above is performed. The methods of degreasing treatment and water washing are not particularly limited, and a conventional method may be used. Various acids such as sulfuric acid, hydrochloric acid, nitric acid, and mixtures of these acids may be used in the pickling. Among these, sulfuric acid, hydrochloric acid, or a mixture of sulfuric acid and hydrochloric acid are preferred. Although the acid concentration is not particularly limited, approximately 1 mass% to 20 mass% is preferable, in consideration of the ability to remove oxide coating and the prevention of rough skin (surface defects) due to excessive pickling. Further, the pickling solution may also contain, for example, a defoamer, a pickling promoter, a pickling inhibitor, and the like.

[Annealing]

The cold-rolled steel sheet obtained as described above (including the case of the metal coated or plated steel sheet) is annealed at an annealing temperature of 760 °C or more and 900 °C or less, for an annealing time of 20 s or more. The number of annealing cycles may be two or more, but one is preferred from the viewpoint of energy efficiency.

Annealing temperature: 760 °C or more and 900 °C or less

When the annealing temperature is less than 760 °C, the ratio of austenite formation during heating in the two-phase region of ferrite and austenite is insufficient and $S_{BF} + S_{TM}$ decreases. This reduces hole expansion formability. Further, $S_{BF} + S_{TM} + 2 \times S_{MA}$ decreases. Accordingly, achieving a TS of 590 MPa or more may become difficult. Further, recrystallization of ferrite is less likely to occur. This may result in a reduced hole expansion ratio and reduced local ductility. On the other hand, when the annealing temperature exceeds 900 °C, excessive austenite grain growth occurs and the microstructure generated in subsequent processing becomes coarse. This increases $S_{MA1}/S_{MA}$ and decreases hole expansion formability and local ductility. Further, the area ratio of ferrite decreases and $S_{BF} + S_{TM} + 2 \times S_{MA}$ increases. This may result in an excessive increase in TS, which may reduce ductility, hole expansion formability, local ductility, and strain hardenability. The annealing temperature is therefore 760 °C or more and 900 °C or less. The annealing temperature is preferably 780 °C or more. The annealing temperature is more preferably more than 790 °C. Further, the annealing temperature is preferably 880 °C or less. The annealing temperature is the maximum arrival temperature during the annealing.

Annealing time: 20 s or more

When the annealing time is less than 20 s, the ratio of austenite formation during heating in the two-phase region of ferrite and austenite is insufficient, and $S_{BF} + S_{TM}$ decreases. This reduces hole expansion formability. Further, $S_{BF} + S_{TM} + 2 \times S_{MA}$ decreases. Accordingly, achieving a TS of 590 MPa or more may become difficult. Further, recrystallization of ferrite is less likely to occur. This may result in a reduced hole expansion ratio and reduced local ductility. The annealing time is therefore 20 s or more. An upper limit of the annealing time is not particularly limited. The annealing time is preferably 900 s or less. The annealing time is a holding time in a temperature range from (annealing temperature - 40 °C) or more to the annealing temperature or less. That is, the annealing time includes not only the holding time at the annealing temperature, but also the time in the temperature range from (annealing temperature - 40 °C) or more to the annealing temperature or less during heating and cooling before and after reaching the annealing temperature.

Dew Point: more than -30 °C

In the method for manufacturing the galvanized steel sheet according to an embodiment of the present disclosure, the dew point of the annealing atmosphere in the annealing is preferably more than -30 °C. The dew point being more than -30 °C means the decarburization reaction is promoted and the C concentration in the surface layer of the cold-rolled steel sheet (base steel sheet) is reduced to form a decarburized layer. The dew point is preferably -20 °C or more. The dew point is more preferably -5 °C or more. The dew point of -5 °C or more may further enhance the resistance weld crack resistance in the welded portion. An upper limit of the dew point is not particularly limited. The dew point is preferably 30 °C or less from the viewpoint of suitably hindering oxidation on the surface of the cold-rolled steel sheet or metal coating or plating layer and securing good adhesion when a galvanized layer is applied.

[First cooling]

The cold-rolled steel sheet annealed as described above is cooled to the first cooling stop temperature of 300 °C or more and 550 °C or less.

First cooling stop temperature $T_0$: 300 °C or more and 550 °C or less

When the first cooling stop temperature is less than 300 °C, the area ratio of tempered martensite increases excessively and the appropriate amount of bainitic ferrite and the retained austenite area ratio are not obtained. Further, untransformed austenite may decompose into pearlite and carbides during the subsequent galvanizing treatment. Accordingly, the area ratio of retained austenite and IDR [%Cy] are reduced, and ductility and strain hardenability are reduced. On the other hand, when the first cooling stop temperature exceeds 550°C, the area ratio of bainitic ferrite decreases. As a result, the area ratio of retained austenite and IDR [%Cy] are reduced, and ductility, local ductility, and strain hardenability are also reduced. Further, $S_{MA1}/S_{MA}$ may increase. As a result, hole expansion formability and local ductility may decrease. The first cooling stop temperature is therefore 300 °C or more and 550 °C or less. The first cooling stop temperature is preferably 350 °C or more. The first cooling stop temperature is preferably 510 °C or less.

[Holding]

The cold-rolled steel sheet is held at the temperature range from 300 °C or more to 550 °C or less (hereinafter also referred to as the holding temperature range) for 3 s or more to 600 s or less.

Holding time in holding temperature range: 3 s to 600 s

In the holding, bainitic ferrite is formed and C diffusion from formed bainitic ferrite to untransformed austenite adjacent to the bainitic ferrite occurs. As a result, the area ratio of a defined amount of retained austenite is ensured and IDR [%Cy] is increased.

Here, when the holding time in the holding temperature range is less than 3 s, the area ratio of bainitic ferrite and IDR [%Cy] may decrease. This may reduce ductility, local ductility, and strain hardenability. On the other hand, when the holding time in the holding temperature range exceeds 600 s, the area ratio of bainitic ferrite increases excessively, resulting in reduced ductility and hole expandability. Further, excessive C diffusion from bainitic ferrite to untransformed austenite may cause an increase in $S_{MA1}/S_{MA}$ and reduce hole expansion formability and local ductility. Further, excessive C diffusion inside untransformed austenite may cause untransformed austenite to decompose into pearlite and carbides during the subsequent galvanizing treatment. As a result, the area ratio of retained austenite and IDR [%Cy] decrease, resulting in reduced ductility and local ductility. The holding time in the holding temperature range is therefore 3 s or more to 600 s or less. The holding time in the holding temperature range is preferably 5 s or more. The holding time in the holding temperature range is more preferably 10 s or more. The holding time in the holding temperature range is preferably less than 200 s. The holding time in the holding temperature range is more preferably less than 80 s. The holding time in the holding temperature range includes the time the cold-rolled steel sheet remains in the temperature range until reaching the first cooling stop temperature in the first cooling, and the time the cold-rolled steel sheet remains in the temperature range until the start of galvanizing treatment in the coating described below (for example, the time the cold-rolled steel sheet remains in the temperature range until dipped into the galvanizing bath). However, the holding time in the holding temperature range does not include the time in the temperature range of the galvanized steel sheet after applying the galvanizing treatment in the coating.

[Coating]

The cold-rolled steel sheet is then subjected to a galvanizing treatment to produce a galvanized steel sheet. Examples of the galvanizing treatment include hot-dip galvanizing treatment and galvannealing treatment. In the coating, the relationship between the first cooling stop temperature in the first cooling and the temperature of the galvanizing bath in the galvanizing treatment (hereinafter also referred to as coating bath temperature) needs to satisfy the following Formula (1):

$$-80 \ °C \le T_0 - T_1 \le 50 \ °C \qquad \qquad \ldots (1)$$

Here, $T_0$ is the first cooling stop temperature (°C) and $T_1$ is the temperature of the galvanizing bath in the galvanizing treatment (°C).

That is, from the viewpoint of securing excellent strain hardenability, the difference between the first cooling stop temperature and the coating bath temperature needs to be appropriately controlled, and specifically, the relationship in Formula (1) needs to be satisfied. On the other hand, when $T_0 - T_1$ is more than 50 °C or less than -80 °C, IDR [%Cy] decreases and strain hardenability decreases. $T_0 - T_1$ is preferably -75 °C or more. $T_0 - T_1$ is more preferably -70 °C or more. $T_0 - T_1$ is preferably 45 °C or less. $T_0 - T_1$ is more preferably 40 °C or less.

Conditions other than the above are not particularly limited, and a conventional method may be used.

For example, in the case of hot-dip galvanizing treatment, after the cold-rolled steel sheet is immersed in the galvanizing bath, adjusting the coating weight by gas wiping or the like is preferable. The coating bath temperature is 440 °C or more and 500 °C or less. Further, as a galvanizing bath, there is no particular limitation as long as the composition of the galvanized layer is as described above. For example, a galvanizing bath having an Al content of 0.10 mass% or more and 0.23 mass% or less with the balance being Zn and inevitable impurity is preferable.

Further, in the case of galvannealing treatment, after hot-dip galvanizing treatment is performed as described above, the galvanized steel sheet is preferably heated to an alloying temperature of 450 °C or more and 600 °C or less and subjected to an alloying treatment. When the alloying temperature is less than 450 °C, the Zn-Fe alloying rate becomes slow and alloying may be difficult. On the other hand, when the alloying temperature exceeds 600 °C, untransformed austenite may transform to pearlite, resulting in a decrease in TS and ductility. The alloying temperature is more preferably 470 °C or more. The alloying temperature is more preferably 570 °C or less.

The coating weight for both a hot-dip galvanized steel sheet (GI) and a galvannealed steel sheet (GA) is preferably 20 g/m$^2$ to 80 g/m$^2$ per side. The coating weight may be adjusted by gas wiping and the like.

Additional holding may be performed before the second cooling described below and after or during the coating, in which the galvanized steel sheet is held at a temperature range from 300 °C or more to 550 °C or less (hereinafter also referred to as the additional holding temperature range) for 3 s or more to 600 s or less. The additional holding has a similar effect to the holding previously described. In the case of galvannealing treatment as a coating treatment, the additional holding may be performed during the coating, that is, the coating may also serve as the additional holding. Further, when the additional holding is performed, the total of the holding time in the holding temperature range and the holding time in the additional holding temperature range is preferably 3 s or more to 600 s or less. The total of the holding time in the holding temperature range and the holding time in the additional holding temperature range is more preferably less than 200 s.

[Second cooling]

The galvanized steel sheet is then cooled to the second cooling stop temperature of -20 °C or more and less than 300 °C.

Second cooling stop temperature: -20 °C or more and less than 300 °C

The second cooling is necessary to control the area ratio of tempered martensite and retained austenite generated in the subsequent reheating within a defined range, and to control IDR [%Cy] within a defined range. After the second cooling, reheating is performed, which results in C enrichment into untransformed austenite during the reheating. In the case of obtaining final tempered martensite, martensite is preferably formed in the second cooling. Here, when the second cooling stop temperature is less than -20 °C, almost all of the untransformed austenite in the steel is transformed to martensite in the second cooling. This decreases the area ratio of retained austenite. As a result, ductility and strain hardenability may decrease. On the other hand, when the second cooling stop temperature is 300 °C or more, IDR [%Cy] decreases and ductility, local ductility, and strain hardenability decrease. Further, the area ratio of tempered martensite decreases, and the area ratio of fresh martensite and $S_{BF} + S_{TM} + 2 \times S_{MA}$ increase. This may increase TS and reduce ductility, hole expansion formability, local ductility, and strain hardenability. Further, with the increase in the area ratio of fresh martensite, the amount of diffusible hydrogen in the steel sheet increases and the hole expansion formability decreases. Further, an increase in $S_{MA1}/S_{MA}$ also reduces hole expansion formability. The second cooling stop temperature is therefore -20 °C or more and less than 300 °C. The second cooling stop temperature is preferably 0 °C or more. The second cooling stop temperature is preferably 280 °C or less.

[Reheating]

The galvanized steel sheet is then reheated to a reheating temperature of 300 °C or more and 500 °C or less, and the galvanized steel sheet is held in a temperature range from 300 °C or more to 500 °C or less (hereinafter also referred to as the reheating temperature range) for 10 s or more to 2,000 s or less.
This tempers the martensite present in the steel at the end of the second cooling. Further, by diffusing the supersaturated solute of C in martensite into untransformed austenite, stable austenite at room temperature, that is, retained austenite, is generated.

Reheating temperature: 300 °C or more to 500 °C or less

When the reheating temperature is less than 300 °C, C diffusion from martensite present in the steel at the end of the second cooling to untransformed austenite does not proceed sufficiently, and the defined area ratio of retained austenite is not obtained. This reduces ductility. Further, IDR [%Cy] decreases. This may reduce local ductility and strain hardenability. On the other hand, when the reheating temperature exceeds 500 °C, untransformed austenite present in the steel at the end of the second cooling decomposes as carbides (pearlite). As a result, the area ratio of retained austenite and IDR [%Cy] are reduced, and ductility, local ductility, and strain hardenability are also reduced. Further, external release of hydrogen included in the base steel sheet becomes insufficient, resulting in an increase in the amount of diffusible hydrogen in the base steel sheet. This reduces hole expansion formability. The reheating temperature is therefore 300 °C or more and 500 °C or less. The reheating temperature is preferably 320 °C or more. The reheating temperature is preferably 450 °C or less. The reheating temperature is the maximum arrival temperature in the reheating.

Holding time in reheating temperature range: 10 s or more to 2,000 s or less

When the holding time in the reheating temperature range is less than 10 s, C diffusion from martensite present in the steel at the end of the second cooling to untransformed austenite does not proceed sufficiently, and the defined area ratio of retained austenite is not obtained, and IDR [%Cy] is not obtained. This reduces ductility and local ductility. Further, fresh martensite increases excessively. In addition, external release of hydrogen included in the base steel sheet becomes insufficient, resulting in an increase in the amount of diffusible hydrogen in the base steel sheet. This may reduce hole expansion formability. On the other hand, when the holding time in the reheating temperature range exceeds 2,000 s, untransformed austenite present in the steel at the end of the second cooling decomposes as carbides (pearlite), resulting in a decrease in the area ratio of retained austenite and IDR [%Cy], and a decrease in ductility and strain hardenability. The holding time in the reheating temperature range is therefore 10 s or more to 2,000 s or less. The holding time in the reheating temperature range is preferably 15 s or more. The holding time in the reheating temperature range is preferably 1,200 s or less. The holding time in the reheating temperature range includes not only the holding time at the reheating temperature, but also the time in the reheating temperature range during heating and cooling before and after reaching the reheating temperature.
Cooling conditions after holding in the reheating temperature range are not particularly limited, and a conventional method may be followed. For example, gas jet cooling, mist cooling, roll cooling, water cooling, air cooling, and the like may be applied as cooling methods. From the viewpoint of preventing surface oxidation, after holding the product in the reheating temperature range, cooling to 50 °C or less is preferable. Cooling to about room temperature is more preferable. For example, an average cooling rate of 1 °C/s or more and 50 °C/s or less in cooling after holding in the reheating temperature range is suitable.
The galvanized steel sheet obtained as described above may be further subjected to temper rolling. When the reduction ratio of the temper rolling exceeds 2.00 %, yield stress may increase and dimensional accuracy may decrease when forming the galvanized steel sheet into a member. Therefore, the reduction ratio of the temper rolling is preferably 2.00 % or less. A lower limit of the reduction ratio of the temper rolling is not particularly limited. From the viewpoint of productivity, the reduction ratio of the temper rolling is preferably 0.05 % or more. The temper rolling may be performed on equipment that is continuous (on-line) with the annealing equipment used to perform each of the aforementioned processes, and may be performed on equipment that is discontinuous (off-line) with the annealing equipment used to perform each of the processes. The number of rolling cycles for the temper rolling may be one, two, or more. Processing by a leveler or the like is also acceptable, as long as the same elongation rate as temper rolling is provided.

Conditions other than those described above are not particularly limited, and a conventional method may be used.

[4] Method for manufacturing member

The following describes a method for manufacturing a member according to an embodiment of the present disclosure.

The method for manufacturing a member according to an embodiment of the present disclosure includes forming or joining at least one of the galvanized steel sheet (for example, the galvanized steel sheet manufactured by the method for manufacturing a galvanized steel sheet) into a member by applying at least one of forming or joining.

Here, a forming method is not particularly limited, and a general processing method such as press working may be used, for example. Further, a joining method is also not particularly limited, and for example, general welding such as spot welding, laser welding, arc welding, and the like, rivet joining, swaging joining, and the like may be used. Forming and joining conditions are not particularly limited and may follow a conventional method.

EXAMPLES

• Examples 1

Steel material having the chemical compositions listed in Table 1 (the balance being Fe and inevitable impurity) was melted in a converter and made into steel slabs by a continuous casting method. The obtained steel slabs were heated to 1,250 °C. After heating, the steel slabs were hot rolled, consisting of rough rolling and finish rolling, to produce hot-rolled steel sheets. The hot-rolled steel sheets were then pickled and cold-rolled (rolling reduction ratio: 50 %) to produce cold-rolled steel sheets having the thicknesses listed in Table 3. The obtained cold-rolled steel sheets were then subjected to the annealing, the first cooling, the holding, the coating, the second cooling, and the reheating under conditions listed in Table 2 to obtain galvanized steel sheets. The dew point during the annealing was -35 °C to -30 °C.

Here, in the coating, hot-dip galvanizing treatment or galvannealing treatment was performed to obtain hot-dip galvanized steel sheets (hereinafter also referred to as GI) or galvannealed steel sheets (hereinafter also referred to as GA). In Table 2, the type of coating is indicated as "GI" or "GA". In the case of the galvannealing treatment, except for No. 12, the total of the holding time in the holding temperature range and the holding time in the temperature range of 300 °C or more and 550 °C or less in the alloying treatment was 3 s or more to 600 s or less.

Further, in the case of producing GI, a galvanizing bath was used that had a composition of Al: 0.20 mass%, with the balance being Zn and inevitable impurity. In the case of producing GA, a galvanizing bath was used that had a composition of Al: 0.14 mass%, with the balance being Zn and inevitable impurity.

The coating bath temperature was 470 °C for both GI and GA production.

The coating weight was 45 g/m$^2$ to 72 g/m$^2$ per side when producing GI and 45 g/m$^2$ per side when producing GA.

The composition of the galvanized layer of the final galvanized steel sheet in the case of GI was Fe: 0.1 mass% to 1.0 mass% and Al: 0.2 mass% to 1.0 mass%, with the balance being Zn and inevitable impurity. In the case of GA, the composition was Fe: 7 mass% to 15 mass% and Al: 0.1 mass% to 1.0 mass%, with the balance being Zn and inevitable impurity.

Galvanized layers were formed on both sides of the base steel sheet.

Using the galvanized steel sheets thus obtained, the steel microstructures of the base steel sheets were identified and the amounts of diffusible hydrogen were measured, as described above. The measurement results are listed in Table 3. In Table 3, F is ferrite, BF is bainitic ferrite, TM is tempered martensite, RA is retained austenite, FM is fresh martensite, LB is lower bainite, P is pearlite, and θ is cementite.

Further, tensile strength (TS), elongation after fracture (T-El), maximum hole expansion ratio (λ), local elongation (L-El), strain hardening index (n-value), and yield stress (YS) were evaluated according to the following criteria by conducting tensile testing and hole expanding tests according to the following procedures.

• TS

O (Pass):

$$590 \text{ MPa} \leq \text{TS} < 980 \text{ MPa}$$

X (Fail):

$$\text{TS} < 590 \text{ MPa, or } 980 \text{ MPa} \leq \text{TS}$$

- T-El

  O (Pass):

  when

$$590 \text{ MPa} \leq \text{TS} < 780 \text{ MPa, } 30.0 \text{ \% } \leq \text{T-El}$$

  when

$$780 \text{ MPa} \leq \text{TS, } 19.0 \text{ \% } \leq \text{T-El}$$

  X (Fail):

  when

$$590 \text{ MPa} \leq \text{TS} < 780 \text{ MPa, } 30.0 \text{ \% } > \text{T-El}$$

  when

$$780 \text{ MPa} \leq \text{TS, } 19.0 \text{ \% } > \text{T-El}$$

- $\lambda$

  O (Pass):

  when

$$590 \text{ MPa} \leq \text{TS} < 780 \text{ MPa, } 45 \text{ \% } \leq \lambda$$

  when

$$780 \text{ MPa} \leq \text{TS, } 40 \text{ \% } \leq \lambda$$

  X (Fail):

  when

$$590 \text{ MPa} \leq \text{TS} < 780 \text{ MPa, } 45 \text{ \% } > \lambda$$

  when

$$780 \text{ MPa} \leq \text{TS}, 40 \% > \lambda$$

- L-El

O (Pass):

when

$$590 \text{ MPa} \leq \text{TS} < 780 \text{ MPa}, 10.0 \% \leq \text{L-El}$$

when

$$780 \text{ MPa} \leq \text{TS}, 7.0 \% \leq \text{L-El}$$

X (Fail):

when

$$590 \text{ MPa} \leq \text{TS} < 780 \text{ MPa}, 10.0 \% > \text{L-El}$$

when

$$780 \text{ MPa} \leq \text{TS}, 7.0 \% > \text{L-El}$$

- n-value

O (Pass):

when

$$590 \text{ MPa} \leq \text{TS} < 780 \text{ MPa}, 0.200 \leq \text{n-value}$$

when

$$780 \text{ MPa} \leq \text{TS}, 0.100 \leq \text{n-value}$$

X (Fail):

when

$$590 \text{ MPa} \leq \text{TS} < 780 \text{ MPa}, 0.200 > \text{n-value}$$

when

$$780 \text{ MPa} \leq \text{TS}, 0.100 > \text{n-value}$$

- YS

O (Pass):

when

$$590 \text{ MPa} \leq \text{TS} < 780 \text{ MPa}, 500 \text{ MPa} \geq \text{YS}$$

when

$$780 \text{ MPa} \leq \text{TS}, 700 \text{ MPa} \geq \text{YS}$$

X (Fail):

when

$$590 \text{ MPa} \leq \text{TS} < 780 \text{ MPa}, 500 \text{ MPa} < \text{YS}$$

when

$$780 \text{ MPa} \leq \text{TS}, 700 \text{ MPa} < \text{YS}$$

(1) Tensile testing

Tensile testing was performed in accordance with JIS Z 2241. That is, a JIS No. 5 test piece was taken from the obtained galvanized steel sheet such that the longitudinal direction was perpendicular to the rolling direction of the base steel sheet. The collected test piece was subjected to tensile testing at a crosshead speed of 10 mm/min to measure TS, T-El, L-El, n-value, and YS. Here, the n-value was calculated from elongation and strength at 0.4 times and 0.8 times uniform elongation (U-El). The results are listed in Table 4.

(2) Hole expanding test

The hole expanding test was performed in accordance with JIS Z 2256. That is, a 100 mm × 100 mm test piece was taken from the obtained galvanized steel sheet by shearing. A 10 mm diameter hole was punched through the test piece with a clearance of 12.5 %. Then, a blank holding force of 9 tonnes (88.26 kN) was applied around the hole using a die having an inside diameter of 75 mm, and a conical punch having an apex angle of 60° was pressed into the hole to measure the diameter of the hole in the test piece at the crack initiation limit (when cracks occurred). The maximum hole expansion ratio: λ (%) was obtained by the following formula. Note that λ is an index for evaluating stretch flangeability. The results are listed in Table 4.

$$\lambda \ (\%) = \{(D_f - D_0)/D_0\} \times 100$$

wherein

$D_f$: diameter of hole in test piece at crack initiation (mm)
$D_0$: diameter of hole in test piece at start (mm)

[Table 1]

Table 1

| Steel sample ID | Chemical composition (mass%) | | | | | | | | Ceq (%) |
|---|---|---|---|---|---|---|---|---|---|
| | C | Si | Mn | P | S | Al | N | Other | |
| A | 0.082 | 1.47 | 2.12 | 0.011 | 0.0020 | 0.037 | 0.0034 | - | 0.497 |

(continued)

| Steel sample ID | Chemical composition (mass%) | | | | | | | | Ceq (%) |
|---|---|---|---|---|---|---|---|---|---|
| | C | Si | Mn | P | S | Al | N | Other | |
| B | 0.093 | 0.86 | 2.26 | 0.017 | 0.0020 | 0.035 | 0.0037 | - | 0.506 |
| C | 0.083 | 1.63 | 1.41 | 0.002 | 0.0016 | 0.026 | 0.0031 | - | 0.386 |
| D | 0.077 | 0.98 | 1.63 | 0.008 | 0.0015 | 0.037 | 0.0042 | - | 0.390 |
| E | 0.090 | 1.14 | 2.10 | 0.010 | 0.0011 | 0.524 | 0.0023 | | 0.488 |
| *__F__* | 0.125 | *__0.03__* | 2.35 | 0.011 | 0.0017 | 0.033 | 0.0027 | - | 0.518 |
| *__G__* | 0.077 | *__3.56__* | 1.42 | 0.012 | 0.0018 | 0.023 | 0.0026 | - | 0.462 |
| *__H__* | 0.152 | 0.89 | *__0.79__* | 0.014 | 0.0024 | 0.030 | 0.0045 | - | 0.321 |
| *__I__* | 0.045 | 0.21 | *__2.91__* | 0.001 | 0.0022 | 0.027 | 0.0031 | - | 0.539 |
| *__J__* | 0.112 | 1.54 | 2.46 | 0.018 | 0.0017 | 0.035 | 0.0036 | - | *__0.620__* |
| K | 0.049 | 1.37 | 2.21 | 0.015 | 0.0020 | 0.024 | 0.0047 | Ti: 0.027 | 0.474 |
| L | 0.086 | 1.49 | 2.24 | 0.013 | 0.0014 | 0.034 | 0.0035 | Nb: 0.023 | 0.521 |
| M | 0.058 | 0.54 | 2.71 | 0.014 | 0.0015 | 0.029 | 0.0035 | V: 0.034 | 0.535 |
| N | 0.106 | 1.71 | 2.14 | 0.024 | 0.0020 | 0.030 | 0.0035 | Ti: 0.022, B: 0.0017 | 0.534 |
| O | 0.089 | 1.55 | 2.13 | 0.020 | 0.0026 | 0.033 | 0.0034 | Cu: 0.19 | 0.509 |
| P | 0.189 | 1.04 | 1.27 | 0.002 | 0.0019 | 0.025 | 0.0021 | Cr: 0.42 | 0.528 |
| Q | 0.087 | 0.29 | 1.80 | 0.008 | 0.0015 | 0.038 | 0.0033 | Ni: 0.69 | 0.416 |
| R | 0.075 | 1.40 | 1.71 | 0.014 | 0.0023 | 0.031 | 0.0037 | Mo: 0.44 | 0.528 |
| S | 0.291 | 0.92 | 1.20 | 0.017 | 0.0014 | 0.042 | 0.0006 | Sb: 0.006 | 0.529 |
| T | 0.090 | 1.35 | 2.16 | 0.011 | 0.0012 | 0.024 | 0.0039 | Sn: 0.008 | 0.506 |
| U | 0.079 | 0.43 | 2.37 | 0.012 | 0.0014 | 0.025 | 0.0025 | Ta: 0.005 | 0.492 |
| V | 0.163 | 0.88 | 1.85 | 0.008 | 0.0025 | 0.018 | 0.0049 | W: 0.018 | 0.508 |
| W | 0.085 | 1.24 | 2.13 | 0.011 | 0.0021 | 0.033 | 0.0035 | Mg: 0.003 | 0.492 |
| X | 0.181 | 2.91 | 1.33 | 0.020 | 0.0004 | 0.032 | 0.0019 | Zn: 0.004 | 0.524 |
| Y | 0.084 | 1.61 | 2.19 | 0.012 | 0.0016 | 0.023 | 0.0036 | Co: 0.006 | 0.516 |
| Z | 0.142 | 1.63 | 1.49 | 0.012 | 0.0013 | 0.035 | 0.0034 | Zr: 0.002 | 0.458 |
| AA | 0.153 | 1.58 | 1.04 | 0.016 | 0.0019 | 0.023 | 0.0027 | Ca: 0.002 | 0.392 |
| AB | 0.082 | 1.26 | 1.57 | 0.017 | 0.0025 | 0.028 | 0.0046 | Ce: 0.001 | 0.396 |
| AC | 0.086 | 1.39 | 2.07 | 0.019 | 0.0016 | 0.036 | 0.0029 | Se: 0.008 | 0.489 |
| AD | 0.086 | 1.10 | 2.16 | 0.019 | 0.0018 | 0.034 | 0.0025 | Te: 0.018 | 0.492 |
| AE | 0.082 | 1.93 | 2.15 | 0.015 | 0.0027 | 0.020 | 0.0032 | Ge: 0.013 | 0.521 |
| AF | 0.058 | 1.47 | 2.43 | 0.013 | 0.0020 | 0.028 | 0.0049 | As: 0.011 | 0.524 |
| AG | 0.112 | 1.32 | 1.92 | 0.062 | 0.0014 | 0.032 | 0.0018 | Sr: 0.009 | 0.487 |
| AH | 0.091 | 1.56 | 2.01 | 0.021 | 0.0018 | 0.034 | 0.0027 | Cs: 0.007 | 0.491 |
| AI | 0.177 | 0.89 | 1.90 | 0.016 | 0.0072 | 0.030 | 0.0043 | Hf: 0.004 | 0.531 |
| AJ | 0.081 | 1.34 | 2.14 | 0.015 | 0.0120 | 0.026 | 0.0024 | Pb: 0.005 | 0.494 |
| AK | 0.057 | 1.63 | 2.12 | 0.016 | 0.0012 | 0.013 | 0.0087 | Bi: 0.002 | 0.478 |
| AL | 0.095 | 1.28 | 2.18 | 0.010 | 0.0022 | 0.027 | 0.0029 | REM: 0.002 | 0.512 |

[Table 2]

Table 2

| No. | Steel sample ID | Annealing | | First cooling | Holding | Coating | | | $T_0-T_1$ | Second cooling | Reheating | | Remarks |
| | | Annealing templ. (°C) | Annealing time (s) | First cooling stop temp. $T_0$ (°C) | Holding time (s) | Coating bath temp. $T_1$ (°C) | Type | Alloying temp. (°C) | (°C) | Second cooling stop temp. (°C) | Reheating temp. (°C) | Holding time (s) | |
|---|---|---|---|---|---|---|---|---|---|---|---|---|---|
| 1 | A | 820 | 90 | 480 | 40 | 455 | GA | 520 | 25 | 200 | 410 | 50 | Example |
| 2 | B | 800 | 100 | 490 | 30 | 455 | GA | 500 | 35 | 190 | 390 | 90 | Example |
| 3 | C | 870 | 80 | 480 | 40 | 470 | GA | 530 | 10 | 50 | 410 | 70 | Example |
| 4 | D | 830 | 90 | 400 | 30 | 460 | GA | 510 | -60 | 20 | 400 | 60 | Example |
| 5 | E | 840 | 130 | 440 | 50 | 455 | GI | - | -15 | 180 | 370 | 110 | Example |
| 6 | B | ***740*** | 150 | 440 | 30 | 470 | GA | 550 | -30 | 90 | 350 | 80 | Comparative Example |
| 7 | B | ***930*** | 120 | 490 | 20 | 465 | GA | 540 | 25 | 200 | 360 | 40 | Comparative Example |
| 8 | C | 800 | ***3*** | 480 | 35 | 455 | GA | 530 | 25 | 120 | 410 | 50 | Comparative Example |
| 9 | A | 830 | 60 | ***200*** | 40 | 470 | GA | 500 | ***-270*** | 100 | 420 | 70 | Comparative Example |
| 10 | A | 820 | 40 | ***580*** | 20 | 465 | GI | - | ***115*** | 240 | 360 | 60 | Comparative Example |
| 11 | A | 790 | 200 | 460 | ***1*** | 470 | GI | - | -10 | 180 | 350 | 80 | Comparative Example |
| 12 | A | 840 | 50 | 470 | ***1200*** | 460 | GA | 540 | 10 | 200 | 400 | 50 | Comparative Example |
| 13 | A | 860 | 130 | 530 | 10 | 460 | GI | - | ***70*** | 180 | 420 | 70 | Comparative Example |

EP 4 368 737 A1

(continued)

| No. | Steel sample ID | Annealing | | First cooling | Holding | Coating | | | T$_0$-T$_1$ | Second cooling | Reheating | | Remarks |
|---|---|---|---|---|---|---|---|---|---|---|---|---|---|
| | | Annealing templ. (°C) | Annealing time (s) | First cooling stop temp. T$_0$ (°C) | Holding time (s) | Coating bath temp. T$_1$ (°C) | Type | Alloying temp. (°C) | (°C) | Second cooling stop temp. (°C) | Reheating temp. (°C) | Holding time (s) | |
| 14 | A | 850 | 150 | 360 | 30 | 455 | GA | 530 | **-95** | 210 | 380 | 140 | Comparative Example |
| 15 | A | 830 | 60 | 480 | 30 | 460 | GA | 500 | 20 | **-50** | 380 | 40 | Comparative Example |
| 16 | A | 800 | 80 | 440 | 20 | 460 | GA | 550 | -20 | **350** | 390 | 30 | Comparative Example |
| 17 | A | 820 | 90 | 480 | 40 | 450 | GA | 520 | 30 | 200 | **270** | 50 | Comparative Example |
| 18 | A | 820 | 110 | 470 | 45 | 450 | GA | 530 | 20 | 180 | **550** | 60 | Comparative Example |
| 19 | A | 810 | 150 | 460 | 30 | 450 | GA | 540 | 10 | 200 | 380 | **2** | Comparative Example |
| 20 | A | 830 | 100 | 430 | 15 | 455 | GA | 510 | -25 | 150 | 420 | **3600** | Comparative Example |
| 21 | A | **920** | 30 | 440 | 20 | 450 | GA | 500 | -10 | 210 | 340 | 70 | Comparative Example |
| 22 | A | **750** | 110 | 500 | 10 | 455 | GI | - | 45 | 150 | 400 | 50 | Comparative Example |
| 23 | A | 860 | **2** | 460 | 30 | 460 | GA | 520 | 0 | 220 | 390 | 70 | Comparative Example |
| 24 | A | 830 | 90 | 420 | **1** | 455 | GI | - | -35 | 260 | 400 | 60 | Comparative Example |
| 25 | A | 830 | 130 | 470 | 30 | 450 | GA | 510 | 20 | 190 | 420 | 30 | Example |

(continued)

| No. | Steel sample ID | Annealing | | First cooling | Holding | Coating | | | $T_0-T_1$ | Second cooling | Reheating | | Remarks |
| --- | --- | --- | --- | --- | --- | --- | --- | --- | --- | --- | --- | --- | --- |
| | | Annealing templ. (°C) | Annealing time (s) | First cooling stop temp. $T_0$ (°C) | Holding time (s) | Coating bath temp. $T_1$ (°C) | Type | Alloying temp. (°C) | (°C) | Second cooling stop temp. (°C) | Reheating temp. (°C) | Holding time (s) | |
| 26 | *F* | 780 | 120 | 460 | 20 | 455 | GA | 520 | 5 | 200 | 400 | 70 | Comparative Example |
| 27 | *G* | 850 | 60 | 430 | 40 | 470 | GI | - | -40 | 190 | 380 | 100 | Comparative Example |
| 28 | *H* | 850 | 80 | 410 | 40 | 450 | GA | 530 | -40 | 150 | 400 | 40 | Comparative Example |
| 29 | *I* | 850 | 90 | 440 | 40 | 465 | GA | 540 | -25 | 200 | 400 | 180 | Comparative Example |

Table 2 (cont'd)

| No. | Steel sample ID | Annealing | | First cooling | Holding | Coating | | | $T_0-T_1$ | Second cooling | Reheating | | Remarks |
| | | Annealing temp. (°C) | Annealing time (s) | First cooling stop temp. $T_0$ (°C) | Holding time (s) | Coating bath temp. $T_1$ (°C) | Type | Alloying temp. (°C) | (°C) | Second cooling stop temp. (°C) | Reheating temp. (°C) | Holding time (s) | |
|---|---|---|---|---|---|---|---|---|---|---|---|---|---|
| 30 | J | 840 | 110 | 460 | 50 | 455 | GA | 520 | 5 | 200 | 400 | 60 | Comparative Example |
| 31 | K | 840 | 120 | 400 | 15 | 445 | GA | 550 | -45 | 140 | 420 | 30 | Example |
| 32 | L | 810 | 140 | 500 | 120 | 470 | GA | 510 | 30 | 160 | 390 | 150 | Example |
| 33 | M | 790 | 100 | 460 | 30 | 470 | GA | 500 | -10 | 160 | 400 | 300 | Example |
| 34 | N | 800 | 80 | 480 | 40 | 450 | GA | 530 | 30 | 150 | 400 | 60 | Example |
| 35 | O | 830 | 60 | 440 | 20 | 455 | GA | 520 | -15 | 200 | 440 | 12 | Example |
| 36 | P | 810 | 110 | 420 | 6 | 470 | GI | - | -50 | 140 | 410 | 60 | Example |
| 37 | Q | 790 | 150 | 450 | 20 | 450 | GA | 510 | 0 | 230 | 450 | 70 | Example |
| 38 | R | 810 | 50 | 460 | 30 | 475 | GA | 570 | -15 | 170 | 380 | 90 | Example |
| 39 | S | 780 | 250 | 380 | 9 | 450 | GI | - | -70 | 130 | 400 | 80 | Example |
| 40 | T | 800 | 70 | 450 | 20 | 465 | GA | 530 | -15 | 150 | 430 | 16 | Example |
| 41 | U | 770 | 90 | 530 | 25 | 480 | GA | 470 | 50 | 210 | 440 | 180 | Example |
| 42 | V | 760 | 130 | 470 | 50 | 465 | GA | 460 | 5 | 170 | 420 | 200 | Example |
| 43 | W | 850 | 20 | 490 | 70 | 455 | GA | 520 | 35 | 190 | 360 | 600 | Example |
| 44 | X | 860 | 160 | 360 | 4 | 440 | GI | - | -80 | 180 | 400 | 100 | Example |
| 45 | Y | 840 | 120 | 450 | 50 | 470 | GA | 500 | -20 | 270 | 330 | 900 | Example |
| 46 | Z | 890 | 70 | 480 | 40 | 465 | GA | 520 | 15 | 100 | 410 | 70 | Example |
| 47 | AA | 850 | 170 | 480 | 35 | 470 | GA | 520 | 10 | -10 | 430 | 80 | Example |
| 48 | AB | 880 | 90 | 490 | 55 | 460 | GA | 540 | 30 | 80 | 370 | 70 | Example |
| 49 | AC | 870 | 50 | 460 | 30 | 455 | GI | - | 5 | 290 | 410 | 60 | Example |

EP 4 368 737 A1

(continued)

| No. | Steel sample ID | Annealing | | First cooling | Holding | Coating | | | T$_0$-T$_1$ | Second cooling | Reheating | | Remarks |
| | | Annealing temp. (°C) | Annealing time (s) | First cooling stop temp. T$_0$ (°C) | Holding time (s) | Coating bath temp. T$_1$ (°C) | Type | Alloying temp. (°C) | (°C) | Second cooling stop temp. (°C) | Reheating temp. (°C) | Holding time (s) | |
|---|---|---|---|---|---|---|---|---|---|---|---|---|---|
| 50 | AD | 840 | 100 | 430 | 10 | 465 | GA | 520 | -35 | 210 | 400 | 70 | Example |
| 51 | AE | 800 | 90 | 460 | 30 | 470 | GA | 530 | -10 | 150 | 370 | 150 | Example |
| 52 | AF | 850 | 70 | 490 | 200 | 460 | GI | - | 30 | 120 | 380 | 120 | Example |
| 53 | AG | 810 | 100 | 480 | 40 | 455 | GA | 520 | 25 | 200 | 340 | 1140 | Example |
| 54 | AH | 830 | 120 | 490 | 50 | 465 | GA | 520 | 25 | 190 | 400 | 150 | Example |
| 55 | AI | 780 | 700 | 430 | 20 | 460 | GA | 470 | -30 | 200 | 380 | 90 | Example |
| 56 | AJ | 810 | 80 | 470 | 35 | 470 | GA | 510 | 0 | 180 | 420 | 40 | Example |
| 57 | AK | 820 | 150 | 510 | 500 | 465 | GA | 540 | 45 | 200 | 400 | 360 | Example |
| 58 | AL | 810 | 120 | 480 | 40 | 465 | GA | 520 | 15 | 150 | 300 | 1800 | Example |

[Table 3]

[Table 3]

Table 3

| No. | Steel sample ID | Sheet thickness (mm) | Area ratio of each phase | | | | | $S_{MA}$ (%) | $S_{MA1}$ (%) | Residual microstructure | SBF + $S_{TM}$ + 2 × $S_{MA}$ (%) | SBF + $S_{TM}$ (%) | $S_{MA1}$/$S_{MA}$ | IDR [%Cγ] (%) | Amount of diffusible hydrogen (mass ppm) | Remarks |
|---|---|---|---|---|---|---|---|---|---|---|---|---|---|---|---|---|
| | | | F (%) | BF (%) | TM (%) | RA (%) | FM (%) | | | | | | | | | |
| 1 | A | 1.2 | 54.1 | 9.4 | 27.6 | 5.1 | 3.8 | 8.9 | 1.3 | - | 54.8 | 37.0 | 0.15 | 0.30 | 0.12 | Example |
| 2 | B | 1.4 | 55.3 | 12.1 | 26.3 | 3.4 | 2.7 | 6.1 | 0.7 | LB | 50.6 | 38.4 | 0.11 | 0.28 | 0.12 | Example |
| 3 | C | 2.0 | 67.3 | 15.2 | 1.2 | 4.2 | 10.6 | 14.8 | 0.3 | θ, P | 460 | 16.4 | 0.02 | 0.34 | 0.18 | Example |
| 4 | D | 2.0 | 71.9 | 10.7 | 0.1 | 4.1 | 8.8 | 12.9 | 0.2 | θ, P | 36.6 | 10.8 | 0.02 | 0.29 | 0.09 | Example |
| 5 | E | 1.4 | 51.1 | 10.6 | 29.1 | 5.0 | 4.2 | 9.2 | 0.5 | - | 58.1 | 39.7 | 0.05 | 0.25 | 007 | Example |
| 6 | B | 2.0 | 94.4 | **_0.0_** | 0.0 | **_0.0_** | 0.6 | 0.6 | 0.2 | θ, P | **_1.2_** | **_0.0_** | 0.33 | - | 004 | Comparative Example |
| 7 | B | 1.4 | **_24.2_** | 10.5 | **_56.3_** | 1.8 | 6.9 | 8.7 | 4.8 | LB | **_84.2_** | **_66.8_** | **_0.55_** | 0.21 | 0.14 | Comparative Example |
| 8 | C | 1.2 | **_95.7_** | **_0.0_** | 0.0 | 2.1 | 1.4 | 3.5 | 0.4 | θ, P | **_7.0_** | **_0.0_** | 0.11 | 0.16 | 0.21 | Comparative Example |
| 9 | A | 1.2 | 41.7 | **_0.2_** | **_52.0_** | **_0.9_** | 2.1 | 3.0 | 0.2 | θ, P | 58.2 | 52.2 | 0.07 | **_0.11_** | 0.18 | Comparative Example |
| 10 | A | 1.6 | 46.5 | **_0.2_** | 45.8 | **_1.1_** | 6.0 | 7.1 | 3.3 | LB | 60.2 | 46.0 | **_0.46_** | **_0.12_** | 0.16 | Comparative Example |
| 11 | A | 2.0 | 57.2 | **_0.4_** | 34.7 | 2.5 | 4.5 | 7.0 | 2.7 | LB | 49.1 | 35.1 | 0.39 | **_0.14_** | 0.12 | Comparative Example |
| 12 | A | 1.4 | 43.6 | **_44.9_** | 0.0 | 2.5 | 7.4 | 9.9 | 5.1 | θ, P | 64.7 | 44.9 | **_0.52_** | **_0.13_** | 0.13 | Comparative Example |
| 13 | A | 1.8 | 40.2 | 3.6 | 48.4 | 3.7 | 4.1 | 7.8 | 0.3 | - | **_67.6_** | 52.0 | 0.04 | **_0.12_** | 0.15 | Comparative Example |
| 14 | A | 1.6 | 40.5 | 4.5 | 48.6 | 1.7 | 3.9 | 5.6 | 0.0 | θ, P | 64.3 | 53.1 | 000 | **_0.13_** | 0.11 | Comparative Example |
| 15 | A | 0.8 | 47.3 | 8.1 | 44.6 | **_0.0_** | 0.0 | 0.0 | 0.0 | - | 52.7 | 52.7 | - | - | 0.15 | Comparative Example |
| 16 | A | 1.0 | 56.0 | 12.4 | 2.7 | **_0.5_** | **_28.4_** | 28.9 | 14.5 | - | **_72.9_** | 15.1 | **_0.50_** | **_0.12_** | **_0.68_** | Comparative Example |
| 17 | A | 1.4 | 51.9 | 6.2 | 33.6 | **_1.0_** | 6.3 | 7.3 | 1.0 | LB | 54.4 | 39.8 | 0.14 | **_0.09_** | 0.13 | Comparative Example |
| 18 | A | 1.4 | 50.4 | 9.3 | 31.5 | **_0.3_** | 3.6 | 3.9 | 0.1 | θ, P | 48.6 | 40.8 | 0.03 | **_0.11_** | **_0.74_** | Comparative Example |
| 19 | A | 1.6 | 54.2 | 8.7 | 28.9 | **_0.7_** | 7.5 | 8.2 | 0.9 | - | 54.0 | 37.6 | 0.11 | **_0.14_** | **_0.83_** | Comparative Example |
| 20 | A | 1.6 | 46.8 | 10.6 | 34.2 | **_0.3_** | 3.0 | 3.3 | 0.1 | LB, θ | 51.4 | 44.8 | 0.03 | **_0.10_** | 0.34 | Comparative Example |
| 21 | A | 1.6 | 36.4 | 11.2 | 41.7 | 5.1 | 3.4 | 8.5 | 0.2 | LB | **_69.9_** | 52.9 | 0.02 | 0.19 | 0.12 | Comparative Example |

(continued)

| No. | Steel sample ID | Sheet thickness (mm) | Area ratio of each phase | | | | | S_MA (%) | S_MA1 (%) | Residual microstructure | SBF + S_TM + 2 × S_MA (%) | SBF + S_TM (%) | S_MA1 /S_MA (%) | IDR [%Cγ] (%) | Amount of diffusible hydrogen (mass ppm) | Remarks |
|---|---|---|---|---|---|---|---|---|---|---|---|---|---|---|---|---|
| | | | F (%) | BF (%) | TM (%) | RA (%) | FM (%) | | | | | | | | | |
| 22 | A | 1.2 | 79.3 | 1.2 | 0.2 | 1.6 | 17.7 | 19.3 | 1.7 | - | 40.0 | 1.4 | 0.09 | 0.29 | 0.18 | Comparative Example |
| 23 | A | 1.4 | 51.7 | 7.8 | 29.5 | 3.8 | 7.2 | 11.0 | 5.2 | - | 59.3 | 37.3 | 0.47 | 0.18 | 0.24 | Comparative Example |
| 24 | A | 1.2 | 50.2 | 3.3 | 33.8 | 2.0 | 10.7 | 12.7 | 1.4 | - | 62.5 | 37.1 | 0.11 | 0.10 | 0.29 | Comparative Example |
| 25 | A | 1.8 | 46.2 | 18.0 | 27.0 | 5.3 | 3.5 | 8.8 | 1.1 | - | 62.6 | 45.0 | 0.13 | 0.31 | 0.71 | Example |
| 26 | F | 0.8 | 47.5 | 8.4 | 36.2 | 0.0 | 6.1 | 6.1 | 0.0 | LB, θ | 56.8 | 44.6 | 000 | - | 006 | Comparative Example |
| 27 | G | 1.8 | 83.0 | 4.5 | 0.0 | 5.3 | 7.2 | 12.5 | 7.1 | - | 29.5 | 4.5 | 0.57 | 0.29 | 0.15 | Comparative Example |
| 28 | H | 2.0 | 94.1 | 3.3 | 0.0 | 2.1 | 0.5 | 2.6 | 0.0 | - | 8.5 | 3.3 | 0.00 | 0.28 | 0.10 | Comparative Example |
| 29 | I | 2.0 | 9.9 | 4.2 | 76.9 | 0.8 | 8.2 | 9.0 | 0.6 | - | 99.7 | 81.1 | 0.07 | 0.32 | 0.10 | Comparative Example |

Steel microstructure

Table 3 (cont'd)

| No. | Steel sample ID | Sheet thickness (mm) | Steel microstructure | | | | | | | | | | | | | Amount of diffusible hydrogen (mass ppm) | Remarks |
|---|---|---|---|---|---|---|---|---|---|---|---|---|---|---|---|---|---|
| | | | Area ratio of each phase | | | | | $S_{MA}$ | $S_{MA1}$ | Residual microstructure | $S_{BF} + S_{TM} + 2 \times S_{MA}$ | $S_{BF} + S_{TM}$ | $S_{MA1} /S_{MA}$ | IDR [%C$\gamma$] | | |
| | | | F | BF | TM | RA | FM | | | | | | | | | |
| | | | (%) | (%) | (%) | (%) | (%) | (%) | (%) | | (%) | (%) | | (%) | | |
| 30 | *J* | 1.2 | **10.5** | 25.2 | **56.4** | 4.9 | 3.0 | 7.9 | 0.4 | - | **97.4** | **81.6** | 0.05 | 0.29 | 0.16 | Comparative Example |
| 31 | K | 1.2 | 46.8 | 17.0 | 26.5 | 5.8 | 3.9 | 9.7 | 1.0 | - | 62.9 | 43.5 | 0.10 | 0.26 | 0.30 | Example |
| 32 | L | 1.0 | 45.6 | 15.8 | 30.1 | 4.5 | 4.0 | 8.5 | 2.1 | - | 62.9 | 45.9 | 0.25 | 0.21 | 0.18 | Example |
| 33 | M | 1.4 | 46.2 | 5.1 | 42.5 | 4.2 | 2.0 | 6.2 | 0.0 | - | 60.0 | 47.6 | 0.00 | 0.17 | 0.14 | Example |
| 34 | N | 1.0 | 45.6 | 16.6 | 30.1 | 3.5 | 4.2 | 7.7 | 1.6 | - | 62.1 | 46.7 | 0.21 | 0.29 | 0.16 | Example |
| 35 | O | 1.2 | 50.1 | 15.4 | 27.5 | 4.8 | 2.2 | 7.0 | 1.9 | - | 56.9 | 42.9 | 0.27 | 0.31 | 0.44 | Example |
| 36 | P | 1.8 | 52.3 | 10.6 | 26.4 | 7.1 | 3.6 | 10.7 | 2.2 | - | 58.4 | 37.0 | 0.21 | 0.31 | 0.10 | Example |
| 37 | Q | 1.2 | 45.4 | 23.5 | 21.9 | 4.2 | 5.0 | 9.2 | 1.7 | - | 63.8 | 45.4 | 0.18 | 0.34 | 0.38 | Example |
| 38 | R | 1.6 | 52.5 | 13.5 | 24.2 | 6.4 | 3.1 | 9.5 | 0.8 | LB | 56.7 | 37.7 | 0.08 | 0.27 | 0.14 | Example |
| 39 | S | 0.8 | 50.2 | 12.7 | 28.6 | 4.8 | 3.7 | 8.5 | 1.2 | - | 58.3 | 41.3 | 0.14 | 0.30 | 0.12 | Example |
| 40 | T | 1.4 | 48.9 | 21.5 | 19.9 | 5.1 | 4.6 | 9.7 | 0.4 | - | 60.8 | 41.4 | 0.04 | 0.30 | 0.35 | Example |
| 41 | U | 0.8 | 470 | 16.5 | 28.8 | 4.5 | 3.2 | 7.7 | 2.9 | - | 60.7 | 45.3 | 0.38 | 0.33 | 0.26 | Example |
| 42 | V | 2.0 | 48.6 | 23.2 | 19.2 | 4.7 | 4.3 | 9.0 | 2.7 | - | 60.4 | 42.4 | 0.30 | 0.32 | 0.17 | Example |
| 43 | W | 1.8 | 47.1 | 16.7 | 28.5 | 4.6 | 2.2 | 6.8 | 1.7 | LB | 58.8 | 45.2 | 0.25 | 0.28 | 0.07 | Example |
| 44 | X | 1.0 | 55.0 | 9.7 | 28.3 | 4.9 | 2.1 | 7.0 | 1.2 | - | 52.0 | 38.0 | 0.17 | 0.31 | 0.16 | Example |
| 45 | Y | 2.0 | 44.3 | 30.2 | 17.2 | 4.3 | 3.7 | 8.0 | 0.5 | LB | 63.4 | 47.4 | 0.06 | 0.25 | 0.17 | Example |
| 46 | Z | 1.2 | 54.3 | 16.0 | 22.1 | 4.4 | 2.5 | 6.9 | 0.6 | $\theta$, P | 51.9 | 38.1 | 0.09 | 0.31 | 0.16 | Example |
| 47 | AA | 0.3 | 80.6 | 7.0 | 0.0 | 3.9 | 6.5 | 10.4 | 0.2 | $\theta$, P | 27.8 | 7.0 | 0.02 | 0.33 | 0.15 | Example |
| 48 | AB | 0.8 | 86.3 | 2.9 | 0.3 | 4.3 | 3.1 | 7.4 | 0.1 | LB, $\theta$, P | 18.0 | 3.2 | 0.01 | 0.25 | 0.08 | Example |
| 49 | AC | 2.0 | 54.2 | 16.3 | 19.6 | 1.8 | 8.1 | 9.9 | 0.7 | - | 55.7 | 35.9 | 0.07 | 0.31 | 0.14 | Example |
| 50 | AD | 1.4 | 51.1 | 11.5 | 29.2 | 5.4 | 2.8 | 8.2 | 0.9 | - | 57.1 | 40.7 | 0.11 | 0.29 | 0.14 | Example |
| 51 | AE | 1.6 | 46.7 | 18.4 | 29.2 | 3.9 | 1.1 | 5.0 | 1.1 | LB | 57.6 | 47.6 | 0.22 | 0.26 | 0.06 | Example |

| No. | Steel sample ID | Sheet thickness (mm) | Area ratio of each phase | | | | | $S_{MA}$ | $S_{MA1}$ | Residual microstructure | $S_{BF} + S_{TM} + 2 \times S_{MA}$ | $S_{BF} + S_{TM}$ | $S_{MA1} / S_{MA}$ | IDR $[\%C\gamma]$ | Amount of diffusible hydrogen | Remarks |
|---|---|---|---|---|---|---|---|---|---|---|---|---|---|---|---|---|
| | | | F | BF | TM | RA | FM | | | | | | | | | |
| | | | (%) | (%) | (%) | (%) | (%) | (%) | (%) | | (%) | (%) | | (%) | (mass ppm) | |
| 52 | AF | 2.0 | 39.3 | 38.0 | 15.7 | 3.1 | 2.4 | 5.5 | 0.8 | LB | 64.7 | 53.7 | 0.15 | 0.19 | 004 | Example |
| 53 | AG | 1.4 | 45.0 | 20.7 | 23.7 | 5.4 | 3.1 | 8.5 | 1.0 | LB | 61.4 | 44.4 | 0.12 | 0.26 | 004 | Example |
| 54 | AH | 2.0 | 49.3 | 13.1 | 29.5 | 5.1 | 3.0 | 8.1 | 1.4 | - | 58.8 | 42.6 | 0.17 | 0.32 | 0.09 | Example |
| 55 | AI | 1.8 | 500 | 18.0 | 23.1 | 5.1 | 3.4 | 8.5 | 2.4 | LB | 58.1 | 41.1 | 0.28 | 0.27 | 0.14 | Example |
| 56 | AJ | 1.8 | 44.6 | 19.3 | 28.0 | 5.5 | 2.6 | 8.1 | 0.7 | - | 63.5 | 47.3 | 0.09 | 0.31 | 0.13 | Example |
| 57 | AK | 2.0 | 44.5 | 21.9 | 26.0 | 5.2 | 2.4 | 7.6 | 1.3 | - | 63.1 | 47.9 | 0.17 | 0.34 | 0.09 | Example |
| 58 | AL | 2.0 | 45.9 | 19.3 | 28.3 | 4.5 | 2.0 | 6.5 | 0.6 | LB | 60.6 | 47.6 | 0.09 | 0.23 | 002 | Example |

[Table 4]

Table 4

| No. | Steel sample ID | TS (MPa) | T-E1 (%) | Z (%) | L-E1 (%) | n-value | YS (MPa) | Type | Remarks |
|---|---|---|---|---|---|---|---|---|---|
| 1 | A | 851 | 25.1 | 59 | 10.5 | 0.143 | 552 | GA | Example |
| 2 | B | 839 | 23.5 | 63 | 9.6 | 0.154 | 561 | GA | Example |
| 3 | C | 610 | 42.5 | 51 | 17.4 | 0.268 | 414 | GA | Example |
| 4 | D | 633 | 37.2 | 81 | 15.3 | 0.227 | 326 | GA | Example |
| 5 | E | 869 | 24.1 | 68 | 9.9 | 0.152 | 543 | GI | Example |
| 6 | B | *572* | 30.1 | *39* | *9.2* | 0.221 | 342 | GA | Comparative Example |
| 7 | B | *1028* | *15.2* | *21* | *6.1* | 0.148 | 635 | GA | Comparative Example |
| 8 | C | *561* | 31.0 | *38* | *8.9* | 0.235 | 362 | GA | Comparative Example |
| 9 | A | 787 | *18.6* | 48 | 7.7 | *0.089* | 681 | GA | Comparative Example |
| 10 | A | 897 | *18.1* | *32* | *6.1* | 0.109 | 670 | GI | Comparative Example |
| 11 | A | 904 | 17.7 | *43* | *6.4* | *0.093* | 636 | GI | Comparative Example |
| 12 | A | 946 | *18.1* | *25* | *6.5* | 0.157 | 507 | GA | Comparative Example |
| 13 | A | 871 | 21.6 | 69 | 11.2 | *0.090* | 692 | GI | Comparative Example |
| 14 | A | 788 | 23.5 | 76 | 10.6 | *0.092* | 668 | GA | Comparative Example |
| 15 | A | 879 | *18.0* | 58 | 8.4 | 0.118 | 688 | GA | Comparative Example |
| 16 | A | *1004* | *15.7* | *22* | *6.6* | 0.165 | 545 | GA | Comparative Example |
| 17 | A | 901 | *18.2* | 41 | *6.4* | *0.096* | 659 | GA | Comparative Example |
| 18 | A | 785 | *18.6* | *38* | *6.5* | *0.091* | *718* | GA | Comparative Example |
| 19 | A | 943 | *16.4* | *36* | *6.7* | 0.138 | 672 | GA | Comparative Example |
| 20 | A | 712 | *29.0* | 79 | 10.7 | *0.094* | *591* | GA | Comparative Example |
| 21 | A | *1001* | *18.3* | 55 | 7.7 | *0.094* | *792* | GA | Comparative Example |
| 22 | A | 785 | 20.5 | *24* | 8.0 | 0.173 | 412 | GI | Comparative Example |
| 23 | A | 872 | 19.6 | *29* | *4.6* | 0.161 | 505 | GA | Comparative Example |
| 24 | A | 902 | 19.2 | 44 | *6.5* | 0.153 | 593 | GI | Comparative Example |
| 25 | A | 844 | 21.3 | 41 | 7.4 | 0.146 | 578 | GA | Example |
| 26 | *F* | 848 | 17.2 | 49 | 7.3 | 0.165 | 561 | GA | Comparative Example |
| 27 | *G* | 634 | 27.2 | *3* | 12.5 | 0.198 | 485 | GI | Comparative Example |
| 28 | *H* | *466* | 40.8 | 85 | 16.5 | 0.322 | 269 | GA | Comparative Example |
| 29 | *I* | 947 | *17.2* | 54 | 8.1 | *0.085* | *827* | GA | Comparative Example |
| 30 | *J* | *1104* | *14.3* | 46 | *5.9* | 0.104 | *851* | GA | Comparative Example |
| 31 | K | 915 | 20.6 | 64 | 8.4 | 0.115 | 697 | GA | Example |
| 32 | L | 861 | 22.1 | 50 | 9.6 | 0.122 | 634 | GA | Example |
| 33 | M | 883 | 20.9 | 80 | 8.7 | 0.103 | 675 | GA | Example |
| 34 | N | 947 | 200 | 61 | 7.4 | 0.121 | 698 | GA | Example |
| 35 | O | 873 | 23.5 | 49 | 9.6 | 0.148 | 540 | GA | Example |

(continued)

| No. | Steel sample ID | TS (MPa) | T-E1 (%) | Z (%) | L-E1 (%) | n-value | YS (MPa) | Type | Remarks |
|---|---|---|---|---|---|---|---|---|---|
| 36 | P | 852 | 24.0 | 47 | 10.8 | 0.130 | 663 | GI | Example |
| 37 | Q | 881 | 21.2 | 51 | 8.4 | 0.144 | 592 | GA | Example |
| 38 | R | 845 | 25.8 | 67 | 11.5 | 0.147 | 578 | GA | Example |
| 39 | S | 939 | 19.4 | 46 | 7.4 | 0.150 | 641 | GI | Example |
| 40 | T | 858 | 24.7 | 71 | 10.7 | 0.124 | 629 | GA | Example |
| 41 | U | 872 | 20.3 | 41 | 8.2 | 0.129 | 606 | GA | Example |
| 42 | V | 813 | 23.4 | 42 | 10.1 | 0.142 | 614 | GA | Example |
| 43 | W | 810 | 24.5 | 52 | 9.8 | 0.172 | 532 | GA | Example |
| 44 | X | 844 | 21.2 | 43 | 8.2 | 0.169 | 524 | GI | Example |
| 45 | Y | 856 | 24.0 | 56 | 9.9 | 0.171 | 455 | GA | Example |
| 46 | Z | 745 | 30.1 | 75 | 12.3 | 0.205 | 492 | GA | Example |
| 47 | AA | 599 | 36.6 | 45 | 13.4 | 0.232 | 447 | GA | Example |
| 48 | AB | 622 | 33.8 | 91 | 12.8 | 0.241 | 401 | GA | Example |
| 49 | AC | 837 | 20.4 | 63 | 7.9 | 0.177 | 506 | GI | Example |
| 50 | AD | 865 | 23.2 | 43 | 8.1 | 0.146 | 583 | GA | Example |
| 51 | AE | 867 | 23.0 | 66 | 9.7 | 0.133 | 648 | GA | Example |
| 52 | AF | 901 | 21.1 | 51 | 8.6 | 0.113 | 691 | GI | Example |
| 53 | AG | 830 | 24.0 | 56 | 9.5 | 0.168 | 546 | GA | Example |
| 54 | AH | 892 | 22.7 | 50 | 9.8 | 0.145 | 584 | GA | Example |
| 55 | AI | 832 | 23.9 | 42 | 9.8 | 0.160 | 535 | GA | Example |
| 56 | AJ | 885 | 23.4 | 68 | 10.0 | 0.149 | 630 | GA | Example |
| 57 | AK | 892 | 21.8 | 46 | 8.6 | 0.139 | 676 | GA | Example |
| 58 | AL | 886 | 22.1 | 61 | 9.6 | 0.147 | 642 | GA | Example |

As indicated in Table 4, the tensile strength (TS), elongation after fracture (T-El), maximum hole expansion ratio ($\lambda$), local elongation (L-El), strain hardening index (n-value), and yield stress (YS) were all acceptable in each of the Examples.

On the other hand, at least one of the following was not sufficient in each of the Comparative Examples: tensile strength (TS), elongation after fracture (T-El), maximum hole expansion ratio ($\lambda$), local elongation (L-El), strain hardening index (n-value), or yield stress (YS).

Further, it was found that members obtained by forming or joining using the steel sheets of the Examples have excellent properties in terms of tensile strength (TS), elongation after fracture (T-El), maximum hole expansion ratio ($\lambda$), local elongation (L-El), strain hardening index (n-value), and yield stress (YS).

• Examples 2

Steel material having the chemical compositions listed in Table 1 (the balance being Fe and inevitable impurity) was melted in a converter and made into steel slabs by a continuous casting method. The obtained steel slabs were heated to 1,250 °C. After heating, the steel slabs were hot rolled, consisting of rough rolling and finish rolling, to produce hot-rolled steel sheets. The hot-rolled steel sheets were then pickled and cold rolled (rolling reduction ratio: 50 %) to produce cold-rolled steel sheets having a thickness of 1.6 mm.

Then, among the cold-rolled steel sheets obtained, No. 5 to No. 7 were subjected to Fe-based electroplating as a metal plating to form a metal plating layer (Fe-based plating layer) on the surfaces of the cold-rolled steel sheet.

Specifically, the cold-rolled steel sheets were first degreased with alkali. The cold-rolled steel sheets were then subjected to electrolytic treatment using the cold-rolled steel sheet as the cathode under the following conditions to form a metal plating layer on the surfaces of the cold-rolled steel sheets.

[Electrolytic Conditions]

Bath temperature: 50 °C
pH: 2.0
Current density: 45 A/dm$^2$
Plating bath: a sulfuric acid bath containing 1.5 mol/L of Fe$^{2+}$ ions
Anode: iridium oxide electrode

The coating weight of the metal plating layer was controlled by the energizing time.

The obtained cold-rolled steel sheets (including metal plated steel sheets having a metal plating layer formed on the surfaces of the cold-rolled steel sheets) were then subjected to the annealing, the first cooling, the holding, the coating, the second cooling, and the reheating under the conditions listed in Table 5 to obtain galvanized steel sheets.

In the coating, galvannealing treatment was applied to obtain galvannealed steel sheets (GA). Treatment conditions other than those listed in Table 5 were the same as in Example 1. Galvanized layers were formed on both sides of the base steel sheet.

Using the galvanized steel sheets thus obtained, the steel microstructures of the base steel sheets were identified, and the thicknesses of the decarburization layer, the coating weights of the metal plating layers, and the amounts of diffusible hydrogen were measured, as described above. Results are listed in Table 6. In Table 6, F is ferrite, BF is bainitic ferrite, TM is tempered martensite, RA is retained austenite, FM is fresh martensite, LB is lower bainite, P is pearlite, and θ is cementite. In Table 6, "-" for decarburization layer thickness and metal plating layer coating weight means no decarburization layer and no metal plating layer, respectively.

Further, tensile strength (TS), elongation after fracture (T-El), maximum hole expansion ratio (λ), local elongation (L-El), strain hardening index (n-value), and yield stress (YS) were evaluated according to the same criteria used for Examples 1 by conducting tensile tests and hole expanding tests according to the same procedures used for Examples 1. The results are listed in Table 7.

Further, resistance weld crack resistance of the welded portions was evaluated according to the following procedure.

<Evaluation of resistance weld crack resistance of welded portions>

As a sheet combination, a test piece 2 that was cut from the obtained galvanized steel sheet into 150 mm (long direction) × 50 mm (short direction) with the transverse direction (direction orthogonal to the rolling direction) (TD) as the long direction and the rolling direction as the short direction, was overlapped with a test galvannealed steel sheet 1 (thickness: 1.6 mm, TS: 980 MPa grade). The test galvannealed steel sheet 1 had a coating weight of 50 g/m$^2$ per side of the galvannealed layer and was cut to the same size as the test piece 2. The sheet combination was assembled so that the surface to be evaluated of the test piece 2 (in a case where the galvanized layer and the metal plating layer is on only one side, the galvanized layer on the one side) and the galvanized layer of the test galvannealed steel sheet 1 faced each other. The sheet combination was fixed to a fixing stand 4 via spacers 3 having a thickness of 2.0 mm. The spacers 3 were a pair of steel sheets, each measuring 50 mm (long direction) × 45 mm (short direction) × 2.0 mm thick. As illustrated in FIG. 2A, the long direction end faces of the pair of steel sheets are aligned with the short direction end faces of the sheet combination. Thus, the distance between the pair of steel sheets was 60 mm. The fixing stand 4 was a single plate with a hole in the center.

Then, using a single-phase AC (50 Hz) resistance welding machine of servomotor pressure type, the sheet combination was subjected to resistance spot welding at a welding current that resulted in a nugget diameter r of 5.9 mm while being deflected by applying pressure with a pair of electrodes 5 (tip diameter: 6 mm) under the conditions of an electrode force of 3.5 kN, a holding time of 0.12 s, 0.18 s, or 0.24 s, and a welding time of 0.36 s, to form a sheet combination with a welded portion. The pair of electrodes 5 applied pressure to the sheet combination from above and below in the vertical direction, with the lower electrode applying pressure to the test piece 2 through the hole in the fixing stand 4. In applying pressure, the lower electrode of the pair of electrodes 5 and the fixing stand 4 were fixed so that the lower electrode was in contact with a plane that was an extension of a plane where the spacers 3 were in contact with the fixing stand 4, and the upper electrode was movable. Further, the upper electrode was in contact with the center of the test galvannealed steel sheet 1. The sheet combination was welded with an inclination of 5° in the long direction of the sheet combination with respect to the horizontal direction. The holding time refers to the time between the end of passage of the welding current and the beginning of electrode release. As illustrated in the lower part of FIG. 2B, the nugget diameter r means the distance between the ends of a nugget 6 in the long direction of the sheet combination.

Then, each sheet combination with a welded portion was cut along the A-A line indicated in the upper part of FIG. 2B to include the center of the welded portion including the nugget 6, and the cross section of the welded portion was observed under an optical microscope (200×) to evaluate the resistance weld crack resistance at the welded portion using the following criteria. When the result was A+, A, or B, the sheet combination was judged to have satisfactory resistance weld crack resistance at the welded portion. When the result was C, the sheet combination was judged to have poor resistance weld crack resistance at the welded portion. The results are listed in Table 7.

A+: no cracks of length 0.1 mm or more were observed at the holding times of 0.12 s, 0.18 s, and 0.24 s.
A: cracks of length 0.1 mm or more were observed at the holding time of 0.12 s, but no cracks of length 0.1 mm or more were observed at the holding times of 0.18 s and 0.24 s.
B: cracks of length 0.1 mm or more were observed at the holding times of 0.12 s and 0.18 s, but no cracks of length 0.1 mm or more were observed at the holding time of 0.24 seconds.
C: cracks of length 0.1 mm or more were observed at the holding times of 0.12 s, 0.18 s, and 0.24 s.

A crack in the test piece 2 is schematically illustrated in the lower part of FIG. 2B, as indicated by reference numeral 7. When a crack forms in the counterpart steel sheet (test galvannealed steel sheet), the stress in the steel sheet to be evaluated (any of the steel sheets in the Examples and Comparative Examples) is distributed, and an appropriate evaluation is not obtained. For this reason, the data in which no cracking occurred in the counterpart steel sheet was used for the Examples.

[Table 5]

Table 5

| No. | Steel sample ID | Annealing | | | First cooling | Holding | Coating | | | $T_0 - T_1$ | Second cooling | Reheating | | Remarks |
| | | Annealing temp. (°C) | Annealing time (s) | Dew point (°C) | First cooling stop temp. $T_0$ (°C) | Holding time (s) | Coating bath temp. $T_1$ (°C) | Type | Alloying temp. (°C) | (°C) | Second cooling stop temp. (°C) | Reheating temp. (°C) | Holding time (s) | |
|---|---|---|---|---|---|---|---|---|---|---|---|---|---|---|
| 1 | A | 820 | 90 | -34 | 480 | 40 | 460 | GA | 520 | 20 | 200 | 410 | 50 | Example |
| 2 | X | 860 | 160 | -32 | 400 | 30 | 455 | GA | 510 | -55 | 180 | 400 | 100 | Example |
| 3 | A | 820 | 90 | 7 | 480 | 40 | 470 | GA | 520 | 10 | 200 | 410 | 50 | Example |
| 4 | A | 830 | 80 | 16 | 480 | 40 | 460 | GA | 510 | 20 | 200 | 410 | 50 | Example |
| 5 | A | 820 | 90 | -15 | 480 | 40 | 470 | GA | 490 | 10 | 200 | 400 | 60 | Example |
| 6 | A | 810 | 100 | 6 | 480 | 40 | 465 | GA | 490 | 15 | 200 | 410 | 50 | Example |
| 7 | X | 860 | 160 | 18 | 400 | 30 | 460 | GA | 510 | -60 | 180 | 400 | 100 | Example |

[Table 6]

Table 6

| No. | Steel sample ID | Sheet thickness (mm) | Steel micro structure | | | | | | | | Residual microstructure | $S_{BF} + S_{TM} + 2 \times S_{MA}$ (%) | $S_{BF} + S_{TM}$ (%) | $S_{MA1}/S_{MA}$ | IDR [%Cy] (%) | Decarburized layer thickness (μm) | Coating weight of metal coating or plating layer (g/m²) | Amount of diffusible hydrogen (mass ppm) | Remarks |
|---|---|---|---|---|---|---|---|---|---|---|---|---|---|---|---|---|---|---|---|
| | | | Area ratio of each phase | | | | | $S_{MA}$ | $S_{MA1}$ | | | | | | | | | | |
| | | | F (%) | BF (%) | TM (%) | RA (%) | FM (%) | (%) | (%) | | | | | | | | | |
| 1 | A | 1.6 | 54.4 | 9.5 | 27.2 | 5.2 | 3.7 | 8.9 | 1.3 | - | 54.5 | 36.7 | 0.15 | 0.32 | - | - | 0.13 | Example |
| 2 | X | 1.6 | 54.9 | 11.6 | 26.2 | 5.1 | 2.2 | 7.3 | 1.2 | - | 52.4 | 37.8 | 0.16 | 0.31 | - | - | 0.16 | Example |
| 3 | A | 1.6 | 54.3 | 9.1 | 27.8 | 5.2 | 3.6 | 8.8 | 1.3 | - | 54.5 | 36.9 | 0.15 | 0.31 | 38 | - | 0.12 | Example |
| 4 | A | 1.6 | 53.8 | 9.3 | 27.9 | 5.1 | 3.9 | 9.0 | 1.2 | - | 55.2 | 37.2 | 0.13 | 0.30 | 52 | - | 0.13 | Example |
| 5 | A | 1.6 | 54.2 | 9.8 | 27.4 | 4.9 | 3.7 | 8.6 | 1.1 | - | 54.4 | 37.2 | 0.13 | 0.29 | 16 | 15.8 | 0.13 | Example |
| 6 | A | 1.6 | 54.0 | 9.5 | 27.5 | 5.0 | 4.0 | 9.0 | 1.3 | - | 55.0 | 37.0 | 0.14 | 0.30 | 42 | 7.2 | 0.12 | Example |
| 7 | X | 1.6 | 55.1 | 11.0 | 27.1 | 4.9 | 1.9 | 6.8 | 1.1 | - | 51.7 | 38.1 | 0.16 | 0.30 | 69 | 13.8 | 0.17 | Example |

[Table 7]

Table 7

| No. | Steel sample ID | TS (MPa) | T-El (%) | λ (%) | L-El (%) | n-value | YS (MPa) | Resistance weld crack resistance | Type | Remarks |
|---|---|---|---|---|---|---|---|---|---|---|
| 1 | A | 842 | 25.4 | 56 | 10.3 | 0.147 | 539 | B | GA | Example |
| 2 | X | 840 | 21.3 | 41 | 8.1 | 0.171 | 516 | B | GA | Example |
| 3 | A | 843 | 24.9 | 61 | 10.7 | 0.141 | 544 | A | GA | Example |
| 4 | A | 836 | 25.3 | 63 | 10.5 | 0.143 | 540 | A | GA | Example |
| 5 | A | 853 | 24.8 | 58 | 10.6 | 0.144 | 549 | A+ | GA | Example |
| 6 | A | 848 | 25.1 | 62 | 10.6 | 0.142 | 550 | A+ | GA | Example |
| 7 | X | 845 | 21.1 | 43 | 8.2 | 0.168 | 520 | A | GA | Example |

As indicated in Table 7, the tensile strength (TS), elongation after fracture (T-El), maximum hole expansion ratio (λ), local elongation (L-El), strain hardening index (n-value), and yield stress (YS) were all acceptable in each of the Examples. Resistance weld crack resistance at the welded portion was also excellent.

Further, No. 3 to No. 7, in particular No. 5 and No. 6, had excellent resistance weld crack resistance at the welded portion.

Further, it was found that members obtained by forming or joining using the steel sheets of the Examples have excellent properties in terms of tensile strength (TS), elongation after fracture (T-El), maximum hole expansion ratio (λ), local elongation (L-El), strain hardening index (n-value), yield stress (YS), and resistance weld crack resistance at the welded portion.

REFERENCE SIGNS LIST

1 test galvannealed steel sheet
2 test piece
3 spacers
4 fixing stand
5 electrodes
6 nugget
7 crack

**Claims**

1. A galvanized steel sheet comprising a base steel sheet and a galvanized layer on a surface of the base steel sheet, wherein
   the base steel sheet comprises:

   a chemical composition containing, in mass%,
   C: 0.040 % or more and 0.400 % or less,
   Si: 0.20 % or more and 3.00 % or less,
   Mn: 1.00 % or more and less than 2.80 %,
   P: 0.001 % or more and 0.100 % or less,
   S: 0.0200 % or less,
   Al: 0.010 % or more and 2.000 % or less, and
   N: 0.0100 % or less,

where carbon equivalent Ceq is less than 0.540 %, and the balance is Fe and inevitable impurity,
further, the base steel sheet has a microstructure wherein
area ratio of ferrite: 35.0 % or more and 95.0 % or less,
area ratio of bainitic ferrite: 1.0 % or more and 40.0 % or less,
area ratio of tempered martensite: 50.0 % or less (including 0 %),
area ratio of retained austenite: 1.5 % or more,
area ratio of fresh martensite: 20.0 % or less (including 0 %),
$S_{BF} + S_{TM} + 2 \times S_{MA}$: 10.0 % or more and less than 65.0 %,
$S_{BF} + S_{TM}$: 3.0 % or more and 60.0 % or less,
$S_{MA1}/S_{MA}$: 0.40 or less, and
IDR [%Cy]: 0.16 % or more,
and tensile strength is 590 MPa or more and less than 980 MPa,
wherein
$S_{BF}$ is area ratio of the bainitic ferrite,
$S_{TM}$ is area ratio of the tempered martensite,
$S_{MA}$ is area ratio of a hard secondary phase consisting of the retained austenite and fresh martensite,
$S_{MAI}$ is a total area ratio of island regions among island regions constituting the hard secondary phase that have a value of 1.0 $\mu$m or more for area divided by the maximum Feret diameter, and
IDR [%Cy] is a difference between the 90th percentile and the 10th percentile of the distribution of solute C concentration in the retained austenite.

2.  The galvanized steel sheet according to claim 1, wherein the chemical composition of the base steel sheet further contains, in mass%, at least one selected from the group consisting of

    Ti: 0.200 % or less,
    Nb: 0.200 % or less,
    V: 0.100 % or less,
    B: 0.0100 % or less,
    Cu: 1.000 % or less,
    Cr: 1.000 % or less,
    Ni: 1.000 % or less,
    Mo: 0.500 % or less,
    Sb: 0.200 % or less,
    Sn: 0.200 % or less,
    Ta: 0.100 % or less,
    W: 0.500 % or less,
    Mg: 0.0200 % or less,
    Zn: 0.0200 % or less,
    Co: 0.0200 % or less,
    Zr: 0.0200 % or less,
    Ca: 0.0200 % or less,
    Ce: 0.0200 % or less,
    Se: 0.0200 % or less,
    Te: 0.0200 % or less,
    Ge: 0.0200 % or less,
    As: 0.0200 % or less,
    Sr: 0.0200 % or less,
    Cs: 0.0200 % or less,
    Hf: 0.0200 % or less,
    Pb: 0.0200 % or less,
    Bi: 0.0200 % or less, and
    REM: 0.0200 % or less.

3.  The galvanized steel sheet according to claim 1 or 2, wherein an amount of diffusible hydrogen of the base steel sheet is 0.50 mass ppm or less.

4.  The galvanized steel sheet according to any one of claims 1 to 3, further comprising a decarburized layer.

5. The galvanized steel sheet according to any one of claims 1 to 4, further comprising a metal coating or plating layer at least on one side between the base steel sheet and the galvanized layer.

6. The galvanized steel sheet according to claim 5, wherein the metal coating or plating layer is an Fe-based coating or plating layer.

7. The galvanized steel sheet according to any one of claims 1 to 6, wherein the galvanized layer is a hot-dip galvanized layer or a galvannealed layer.

8. A member made using the galvanized steel sheet according to any one of claims 1 to 7.

9. A method for manufacturing a galvanized steel sheet, the method comprising:

hot rolling a steel slab having the chemical composition according to claim 1 or 2 to produce a hot-rolled steel sheet;
cold rolling the hot-rolled steel sheet to produce a cold-rolled steel sheet;
annealing the cold-rolled steel sheet at an annealing temperature of 760 °C or more and 900 °C or less for an annealing time of 20 s or more;
cooling the cold-rolled steel sheet to a first cooling stop temperature of 300 °C or more and 550 °C or less;
holding the cold-rolled steel sheet at a temperature range of 300 °C or more and 550 °C or less for 3 s or more to 600 s or less;
coating the cold-rolled steel sheet by a galvanizing treatment to produce a galvanized steel sheet;
cooling the galvanized steel sheet to a second cooling stop temperature of -20 °C or more and less than 300 °C; and
reheating the galvanized steel sheet to a reheating temperature of 300 °C or more and 500 °C or less, and holding the galvanized steel sheet at a temperature range of 300 °C or more and 500 °C or less for 10 s or more to 2,000 s or less, wherein
a relationship between the first cooling stop temperature and a temperature of a galvanizing bath in the galvanizing treatment satisfies the following Formula (1),

$$-80 \text{ °C} \leq T_0 - T_1 \leq 50 \text{ °C} \qquad \ldots (1)$$

where $T_0$ is the first cooling stop temperature (°C) and $T_1$ is the temperature of the galvanizing bath in the galvanizing treatment (°C).

10. The method for manufacturing a galvanized steel sheet according to claim 9, wherein a dew point of the annealing is more than -30 °C.

11. The method for manufacturing a galvanized steel sheet according to claim 9 or 10, further comprising applying a metal coating or plating treatment after the cold rolling, before the annealing, forming a metal coating or plating layer on at least one surface of the cold-rolled steel sheet.

12. The method for manufacturing a galvanized steel sheet according to claim 11, wherein the metal coating or plating layer is an Fe-based coating or plating layer.

13. The method for manufacturing a galvanized steel sheet according to any one of claims 9 to 12, wherein the galvanizing treatment is a hot-dip galvanizing treatment or a galvannealing treatment.

14. A method for manufacturing a member, wherein at least one of forming or joining is applied to the galvanized steel sheet according to any one of claims 1 to 7 to manufacture the member.

FIG. 1A

FIG. 1B

MA

FERRITE    TEMPERED MARTENSITE    BAINITIC FERRITE

FIG. 1C

MA EXCLUDING MA1

MA1

MICROSTRUCTURE OTHER THAN MA

1 μm

*FIG. 2A*

1.6mm
1.6mm
2.0mm

5

5°

150mm

60mm

45mm

45mm

1

2

3

4

5

*FIG. 2B*

150mm

50mm

4

1

A

A

6

7

1.6mm

1.6mm

1

2

r

## INTERNATIONAL SEARCH REPORT

| International application No. |
| --- |
| **PCT/JP2022/012856** |

### A. CLASSIFICATION OF SUBJECT MATTER

*C22C 38/00*(2006.01)i; *C21D 9/46*(2006.01)i; *C22C 18/00*(2006.01)i; *C22C 38/06*(2006.01)i; *C22C 38/60*(2006.01)i; *C23C 2/06*(2006.01)i; *C23C 2/28*(2006.01)i
FI: C22C38/00 301T; C21D9/46 J; C22C18/00; C22C38/00 301Z; C22C38/06; C22C38/60; C23C2/06; C23C2/28

According to International Patent Classification (IPC) or to both national classification and IPC

### B. FIELDS SEARCHED

Minimum documentation searched (classification system followed by classification symbols)

C22C38/00-38/60; C21D9/46; C23C2/00-2/40; C22C18/00-18/04

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
| --- | --- | --- |
| A | WO 2017/164346 A1 (NIPPON STEEL & SUMITOMO METAL CORPORATION) 28 September 2017 (2017-09-28)<br>claims, paragraphs [0081]-[0114], table 15 | 1-14 |
| A | WO 2016/113788 A1 (JFE STEEL CORPORATION) 21 July 2016 (2016-07-21)<br>claims | 1-14 |
| A | WO 2016/171237 A1 (NIPPON STEEL & SUMITOMO METAL CORPORATION) 27 October 2016 (2016-10-27)<br>claims, paragraphs [0054]-[0062] | 1-14 |
| A | WO 2020/158065 A1 (JFE STEEL CORPORATION) 06 August 2020 (2020-08-06)<br>claims | 1-14 |
| A | JP 2004-285385 A (NISSHIN STEEL CO LTD) 14 October 2004 (2004-10-14)<br>claims | 11-12 |

☐ Further documents are listed in the continuation of Box C.   ☑ See patent family annex.

| | |
| --- | --- |
| \* Special categories of cited documents: | "T" later document published after the international filing date or priority date and not in conflict with the application but cited to understand the principle or theory underlying the invention |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
| --- | --- |
| **26 May 2022** | **07 June 2022** |

| Name and mailing address of the ISA/JP | Authorized officer |
| --- | --- |
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (January 2015)

INTERNATIONAL SEARCH REPORT
Information on patent family members

International application No.

**PCT/JP2022/012856**

| Patent document cited in search report | | | Publication date (day/month/year) | Patent family member(s) | | | Publication date (day/month/year) |
|---|---|---|---|---|---|---|---|
| WO | 2017/164346 | A1 | 28 September 2017 | EP 3434801 A1 claims, paragraphs [0073]-[0098], table 15 US 2019/0003009 A1 CN 108495943 A | | | |
| WO | 2016/113788 | A1 | 21 July 2016 | EP 3219821 A1 claims US 2018/0030564 A1 CN 107109571 A | | | |
| WO | 2016/171237 | A1 | 27 October 2016 | EP 3287539 A1 claims, paragraphs [0048]-[0056] US 2018/0105908 A1 CN 107532266 A | | | |
| WO | 2020/158065 | A1 | 06 August 2020 | EP 3889283 A1 claims US 2022/0098696 A1 CN 113366134 A | | | |
| JP | 2004-285385 | A | 14 October 2004 | (Family: none) | | | |

**REFERENCES CITED IN THE DESCRIPTION**

**Patent documents cited in the description**

- JP 6213696 B
- JP 5447741 B
- JP 6597938 B